# EUROPEAN PATENT APPLICATION

(11) **EP 4 478 789 A2**
(43) Date of publication of application: **18.12.2024**
(21) Application number: 24208714.6
(22) Date of filing: 06.08.2021
(51) Int. Cl.: H04W 48/12

(54) **MULTI-LINK STEERING AND CONTROL IN WLAN**

(30) Priority: 06.08.2020 US 202063062164 P; 03.11.2020 US 202063109221 P
(62) Divisional of application: 21763448.4
(71) Applicant: InterDigital Patent Holdings, Inc., Wilmington, DE 19809 (US)
(72) Inventor: SUN, Li-Hsiang, San Diego, 92128 (US); LOU, Hanqing, New York, 10120 (US); WANG, Xiaofei, New York, 10120 (US)
(74) Representative: AWA Sweden AB

(57) **Abstract**

Methods and apparatus for multi-link (ML) steering and control in wireless local area network (WLAN) are disclosed. A station (STA) multi-link device (MLD) may communicate over a plurality of links. The STA MLD may receive, from an access point (AP) MLD, on a first link of the plurality of links, a first frame comprising a ML element, where the ML element includes pausing information indicating a period of time during which the STA MLD will pause transmission and reception on the first link. The STA MLD may send, to the AP MLD, on a second link of the plurality of links and during the indicated period of time, uplink (UL) traffic, wherein the first link and the second link are multi-directional links. The STA MLD may be non-simultaneous transmit and receive (non-STR), and the AP MLD may be capable of STR.

## Description

### CROSS-REFERENCE TO RELATED APPLICATIONS

This application claims the benefit of U.S. Provisional Application No. 63/062,164, filed August 6, 2020, and U.S. Provisional Application No. 63/109,221, filed November 3, 2020.

### BACKGROUND

In multi-link operations between two multi-link devices, such as an access point (AP) and a non-AP station (STA), the multi-link devices may coordinate with each other regarding which links they are going to use. The choice of links is particularly important if low latency traffic with stringent delay and reliability is to be supported. In addition, constraints imposed by non-simultaneous transmit and receive (STR) multi-link devices (e.g., AP multi-link devices and/or non-AP multi-link devices), which support concurrent transmission or concurrent reception but not concurrent transmission and reception, further complicate the issue of link steering and control in multi-link operations. Thus, mechanisms that efficiently and effectively manage, steer and control link usages between multi-link devices are needed.

### SUMMARY

Methods and apparatus for multi-link (ML) steering and control in wireless local area network (WLAN) are disclosed. A station (STA) multi-link device (MLD) may communicate over a plurality of links. The STA MLD may receive, from an access point (AP) MLD, on a first link of the plurality of links, a first frame comprising a ML element, where the ML element includes pausing information indicating a period of time during which the STA MLD will pause transmission and reception on the first link. The STA MLD may send, to the AP MLD, on a second link of the plurality of links and during the indicated period of time, uplink (UL) traffic, wherein the first link and the second link are multi-directional links. The STA MLD may be non-simultaneous transmit and receive (non-STR), and the AP MLD may be capable of STR.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram of an example message exchange procedure between MLDs over multi-directional links that illustrates UL and DL competition caused by non-default traffic identification (TID)-to-link mapping;
FIG. 3 is a diagram of an example message exchange procedure between MLDs over multi-directional links that illustrates an example of UL and DL competition caused by a long duration transmission opportunity;
FIG. 4 is a diagram of another example message exchange procedure between MLDs over multi-directional links that illustrates UL and DL competition caused by non-default TID-to-link mapping;
FIG. 5 is a diagram of another example message exchange procedure between MLDs over multi-directional links that illustrates real-time change or delay of a buffered frame;
FIG. 6 is a diagram of another example message exchange procedure between MLDs over multi-directional links that illustrates competition between a downlink (DL) trigger frame (TF) transmission and uplink (UL) enhanced distributed channel access (EDCA) transmissions on different links;
FIG. 7 is a diagram of another example message exchange procedure between MLDs over multi-directional links that illustrates an MLD loses network allocation vector (NAV) after UL message transmission on different links;
FIG. 8 is a diagram of an example multi-link steering and control procedure between MLDs over multi-directional links;
FIG. 9 is a diagram of an example message exchange procedure between MLDs over multi-directional links that illustrates example quick-trigger-enabled target wake time (TWT);
FIG. 10 is a diagram of an example message exchange procedure between MLDs over multi-directional links that illustrates example third party quick-trigger-enabled TWT;
FIG. 11 is a diagram of example message exchange procedure between MLDs over multi-directional links that illustrates another example third party quick-trigger-enabled TWT;
FIG. 12 is a diagram of example message exchange procedure between MLDs over multi-directional links that illustrates an example quick-trigger-enabled TWT on a different link;
FIG. 13 is a diagram of example message exchange procedure between MLDs over multi-directional links that illustrates a buffer status indication using add block acknowledgement request and add block acknowledgement response;
FIG. 14A is a diagram of an example frame format of a multi-link (ML) buffer status report (BSR) field;
FIG. 14B is a diagram of an example frame format of a traffic identifier (TID) buffer status report (BSR) field;
FIG. 14C is a diagram of an example frame format of a TID BSR control field;
FIG. 15 is a diagram of an example ML trigger procedure between MLDs over multi-directional links;
FIG. 16 is a diagram of an example pause time procedure between MLDs over multi-directional links;
FIG. 17 is a diagram of an example conditional TF procedure between MLDs over multi-directional links;
FIG. 18 is a diagram of example message exchange procedure between MLDs over multi-directional links that illustrates an AP MLD obtaining a transmission opportunity (TXOP) using a TID EDCA;
FIG. 19 is a diagram of example message exchange procedure between MLDs over multi-directional links that illustrates an AP MLD obtaining a transmission opportunity (TXOP) using an access category by sending a trigger frame (TF);
FIG. 20 is a diagram of example message exchange procedure between MLDs over multi-directional links that illustrates an AP MLD using knowledge of a latest ending time of future TXOPs;
FIG. 21 is a diagram of example message exchange procedure between MLDs over multi-directional links that illustrates the use of an indication to terminate a TXOP early; and
FIG. 22 example per-sub-channel NAV setting procedure.

### DETAILED DESCRIPTION

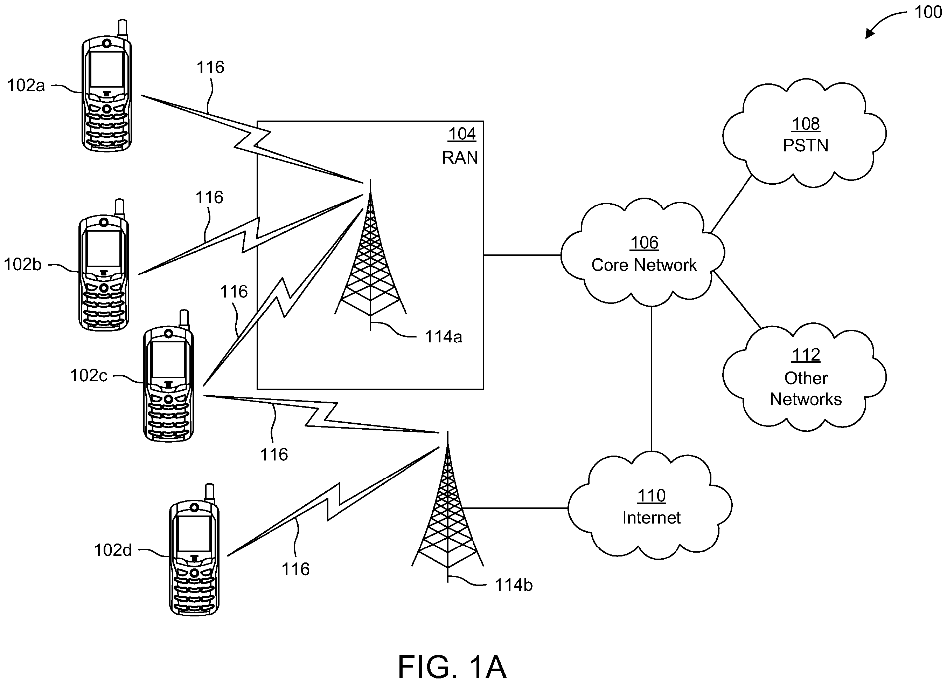

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a multi-link device (MLD), an STA MLD, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a multi-link device (MLD), an AP MLD, a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

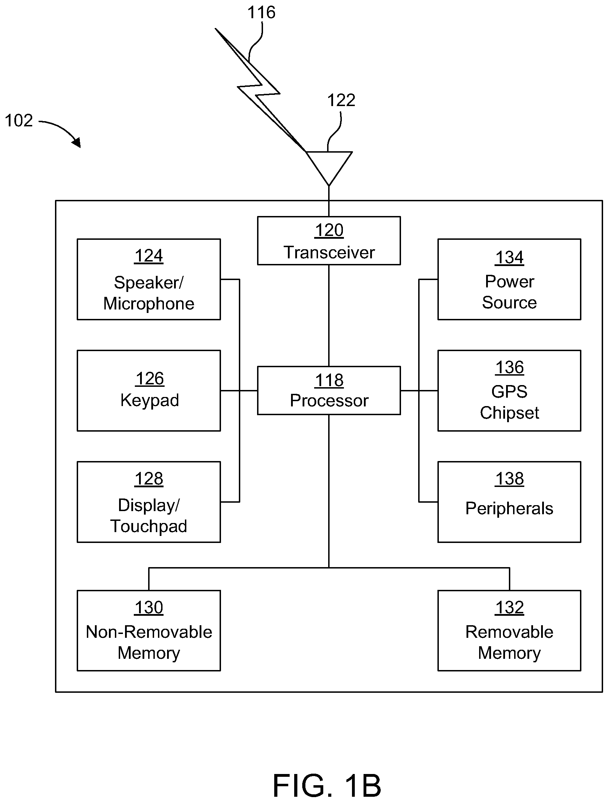

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

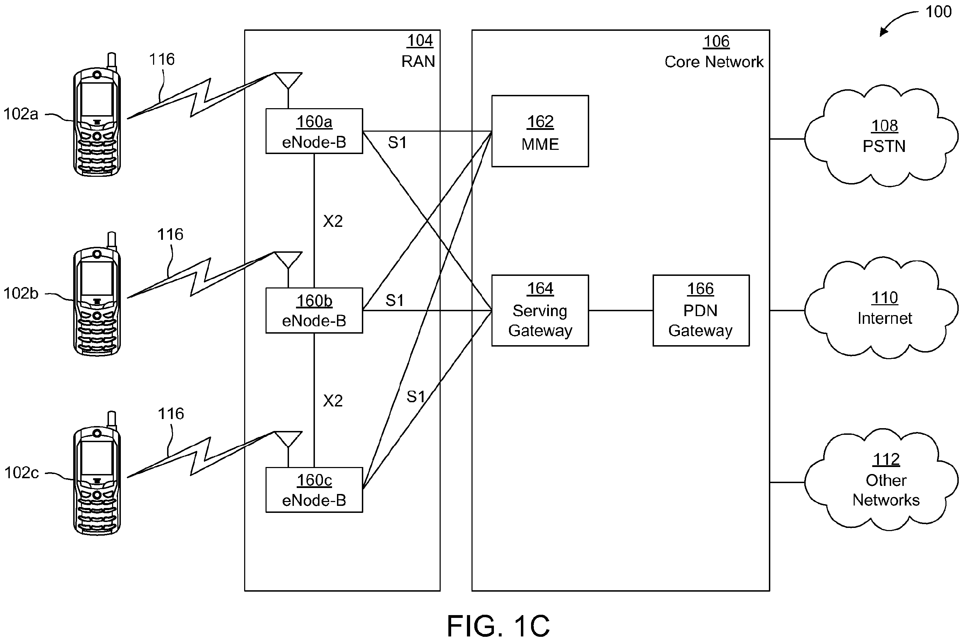

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional landline communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an AP for the BSS and one or more STAs (e.g., non-AP STAs) associated with the AP. The AP may have access (e.g., an interface) to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be peer-to-peer traffic, such that peer-to-peer traffic may be sent directly between the source and destination STAs (e.g., not through the AP) with a direct link setup (DLS). In an example, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may be referred to as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

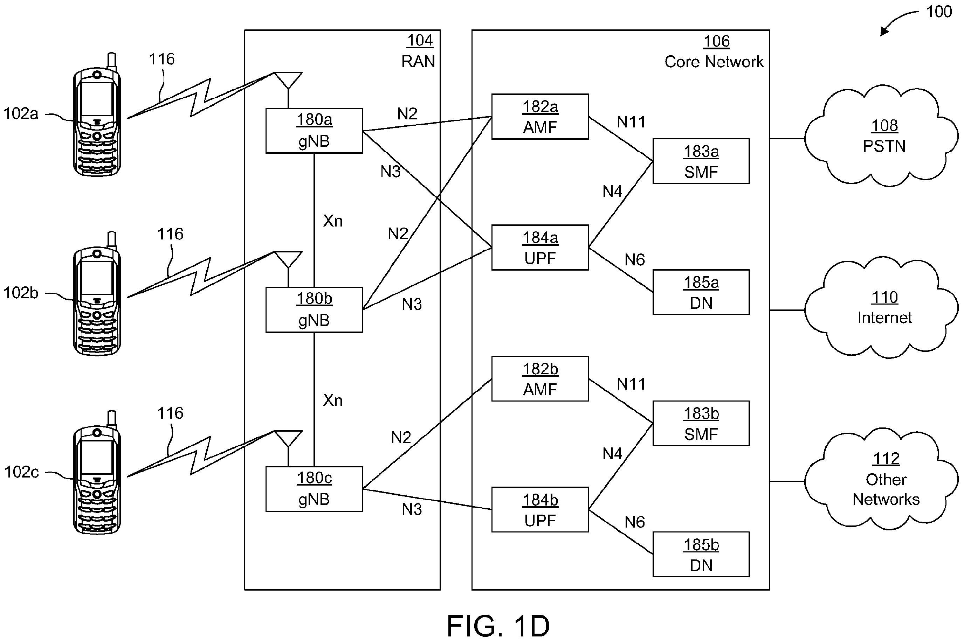

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a, 184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

To improve spectral efficiency in WLAN, 802.11ac has introduced downlink (DL) multi-user MIMO (MU-MIMO) transmission to multiple STAs in the same symbol's time frame, for example, during a downlink OFDM symbol. Downlink MU-MIMO may be used with other protocols, including but not limited to 802.11ah. Because downlink MU-MIMO may use the same symbol timing to multiple STAs, interference of the waveform transmissions to multiple STAs may not be an issue. However, all STAs involved in MU-MIMO transmission with the AP (e.g., DL MU-MIMO transmission from AP to STAs) may need to use the same channel or band, which may limit the operating bandwidth to the smallest channel bandwidth that is supported by a STA that is part of the MU-MIMO transmission with the AP.

The IEEE 802.11 Extremely High Throughput (EHT) Study Group may be considered as the next major revision to IEEE 802.11 standards following 802.11ax. EHT is formed to explore the possibility to further increase peak throughput and improve efficiency of the IEEE 802.11 networks. For example, in 802.11be, the primary use cases and applications addressed may include high throughput and low latency applications such as: Video-over-WLAN, Augmented Reality (AR), and Virtual Reality (VR).

Features in EHT and/or 802.11be, which may be used to achieve the target of increased peak throughput and improved efficiency, include, but are not limited to, the following example features: multi-AP, multi-band/multi-link, 320 MHz bandwidth, 16 spatial streams, hybrid automatic repeat request (HARQ), AP coordination, and/or designs for 6 GHz channel access.

The 802.11be and/or EHT may include multi-link operations, including for example non-simultaneous transmit and receive (non-STR) operations. In the following examples of non-STR operations, the AP multi-link device (MLD) may be capable of simultaneous transmit and receive (STR) on multiple links (e.g., AP MLD may transmit on a first link and receive on a second link simultaneously), and the STA MLD may be non-STR on one or more pair of links (e.g., if a STA MLD is not able to transmit on a first link and receive on a second link simultaneously then the first link and second link pair is considered as non-STR pair for the STA MLD). In an example of non-STR operations, UL transmission from a non-AP MLD on a first link, `link 1', may interfere with reception on a second link, `link 2'. In this case, a synchronization (sync) physical layer convergence procedure (PLCP) protocol data unit (PPDU) transmitted from the AP MLD on different links to the same non-AP MLD may align the ends of the PPDUs in order to reduce and/or avoid interference. In another example of non-STR operations, NAV and/or PPDU length status may be received by a STA MLD on a second link, link 2, after transmission on the first link, link 1. In this case, the AP MLD may provide the NAV related information of link 2 on link 1, and/or may increase clear channel assessment (CCA) sensitivity on link 2 without NAV. In an example of non-STR STA MLD with a single radio operation, the STA MLD may lose NAV status of another link during transmission, and the STA MLD may lose NAV status during data reception.

In the examples directed to non-STR operations described herein, unless otherwise stated, it may be assumed that the AP is an AP MLD capable of STR, and the STA is an STA MLD may be non-STR. In the examples of non-STR operations described herein, unless otherwise stated, the NAV and/or PPDU length status may be received by the STA on a second link, link 2, after transmission on a first link, link 1. The examples described herein, may include representative examples that show two multi-directional links, one or two STA MLDs, and/or one AP MLD, but may be generalized to other numbers of links (e.g., three or more links), STA MLDs (e.g., three or more STA MLDs), and/or AP MLDs not shown.

Although not shown in every example, it may be assumed that a STA MLD may comprise (e.g., internally or co-located) multiple STAs in order to communicate over multiple links. For example, a STA MLD may comprise STA 1 to communicate over link 1 and STA 2 to communicate over link 2. Similarly, an AP MLD may comprise (e.g., internally or co-located) multiple APs in order to communicate over multiple links. For example, an AP MLD may comprise AP 1 to communicate over link 1 and AP 2 to communicate over link 2. In the examples described herein, transmission, message, PPDU, information, frame, and/or data may be used interchangeably to describe the information transmitted and received between the communication devices. In an example, a non-STR STA MLD or non-STR AP MLD may communicate over multiple links using one transceiver or using multiple transceivers (e.g., one transceiver per link). Similarly, In an example, an STR STA MLD or STR AP MLD may communicate over multiple links using one transceiver or using multiple transceivers (e.g., one transceiver per link). Communication between MLDs over the air interface may go through different frequency bands/channels/subchannels, which may be referred to as links. The term `medium" may be used herein as a general term for the air interface between two MLD. Sometimes, a link may include multiple channels or subchannels. An AP may assign OFDMA resources to a STA in terms of resource units (RUs), which may denote groups of sub-carriers to be used by the STA for communication.

In an example, competition may occur between DL transmission(s) to a non-STR (STA) MLD on a first link (e.g., link A or link 1) and UL enhanced distributed channel access (EDCA) transmission(s) on a second link (e.g., link B or link 2) from the non-STR (STA) MLD. Being able to transmit and receive between a STR MLD (e.g., an AP) and a non-STR MLD (e.g., a STA) on a link may depend on the availability of the channel of that link, and may depend on the traffic direction of other links, which may lead to delay or large latency of mapped traffics. Mechanisms and procedures for handling this competition are described herein.

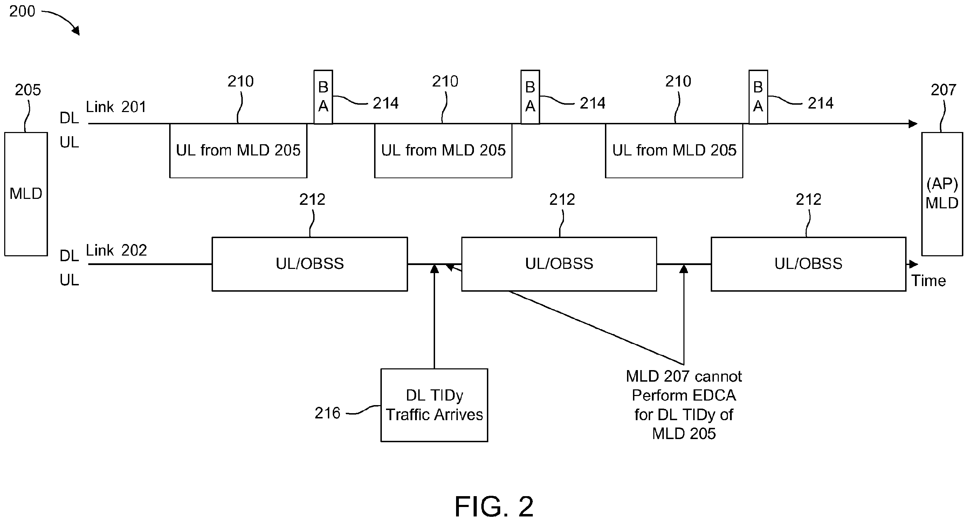

FIG. 2 is a diagram of an example message exchange procedure 200 between MLD 205 (e.g., a non-STR STA MLD) and MLD 207 (e.g., a STR AP MLD) over multi-directional link 201 and multi-directional link 202. The message exchange procedure 200 illustrates an example of UL and DL competition caused by non-default traffic identification (TID)-to-link mapping. In an example, DL TIDy traffic 216 for MLD 205 may be mapped to link 202, while the rest of the TID traffic may be mapped to link 201. DL TIDy traffic 216 may arrive at AP MLD 207 (e.g., traffic is received at the MAC layer from a higher layer) for MLD 205.

During time periods when TIDs of MLD 205 are used by the MLD 205 to send UL messages 210 on link 201 (which may be acknowledged by MLD 207 sending block acknowledgements (BAs) 214), AP MLD 207 may suspend EDCA for TIDy as shown in the example message exchange procedure 200 (e.g., because MLD 205 cannot receive on link 202 while transmitting on link 201). During the time periods that MLD 205 is sending UL messages 210 on link 201 using TIDs, other OBSS/UL STAs (not shown) may occupy the medium (channel) on link 202 by sending UL messages 212 on link 202 and may continue transmitting when MLD 205 on link 201 is idle, causing AP MLD 207 to not be able to perform EDCA for TIDy before UL transmission(s) from MLD 205 finishes. Thus, a higher priority TIDy may not get EDCA opportunity before UL transmission(s) from MLD 205 stops.

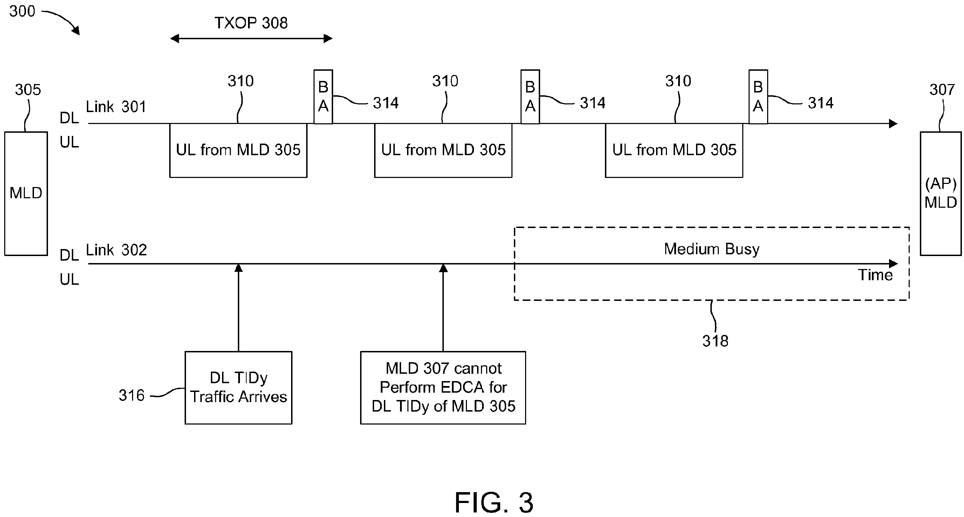

FIG. 3 is a diagram of an example message exchange procedure 300 between MLD 305 (e.g., a non-STR STA MLD) and MLD 307 (e.g., a STR AP MLD) over multi-directional link 301 and multi-directional link 302. The message exchange procedure 300 illustrates an example of UL and DL competition caused by a long duration transmission opportunity (TXOP) 308. In an example, DL TIDy traffic 316 for MLD 305 may be mapped to link 302, while the rest of the TID traffic (e.g., UL and/or DL traffic) for MLD 305 may be mapped to link 301.

As illustrated in FIG. 3, urgent DL TIDy traffic arrives at link 302 and coincides with UL TXOP 308. AP MLD 307 may not be able to perform EDCA on link 302 to send the urgent data with TIDy 316 on link 302 because MLD 305 is transmitting UL data 310 on link 301 (which may be acknowledged by the MLD 407 sending BAs 314). By the time the link 301 UL TXOP 308 ends, the link 302 medium may experience a busy period 318 with other transmissions, and thus the DL urgent data with TIDy 316 may be further delayed until after the busy period 318 on link 302.

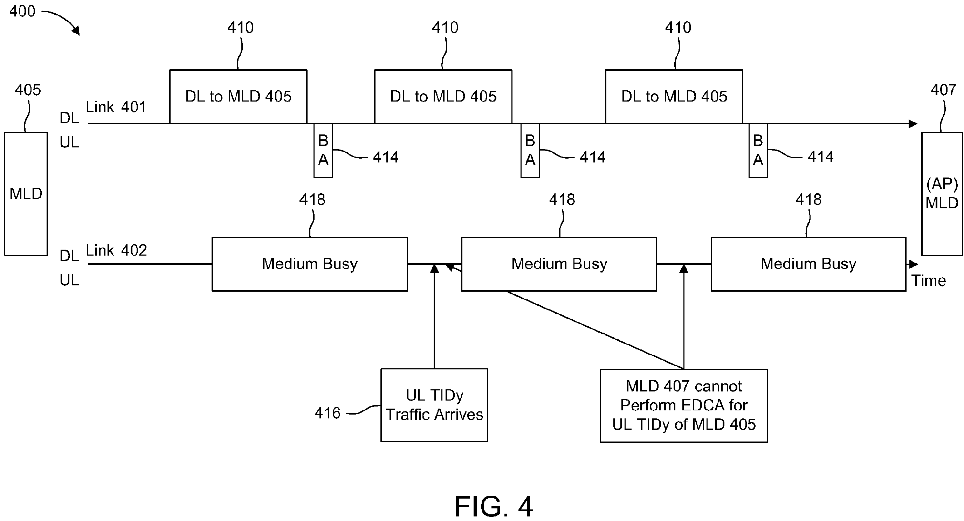

FIG. 4 is a diagram of another example message exchange procedure 400 between MLD 405 (e.g., a non-STR STA MLD) and MLD 407 (e.g., a STR AP MLD) over multi-directional link 401 and multi-directional link 402. The message exchange procedure 400 illustrates an example of UL and DL competition caused by non -default TID-to-link mapping. In an example, DL TIDy traffic 416 for MLD 405 may be mapped to link 402, while the rest of the TID traffic (e.g., UL and/or DL traffic) for MLD 405 may be mapped to link 401.

Transmission on link 402 to/from MLD 405, resulting in the medium being busy 418 on link 402, may disrupt reception on link 401, in particular the ability for MLD 405 to receive DL messages 410 (which may be acknowledged by the MLD 405 sending BAs 414). Furthermore, transmission on link 402 may be restricted to trigger frame-based access because the MLD 405 may park on non-primary channels. Without UL buffer status, the AP MLD 407 may not know to send a trigger frame on link 402 and to stop the DL transmission 410 to MLD 405 on link 401.

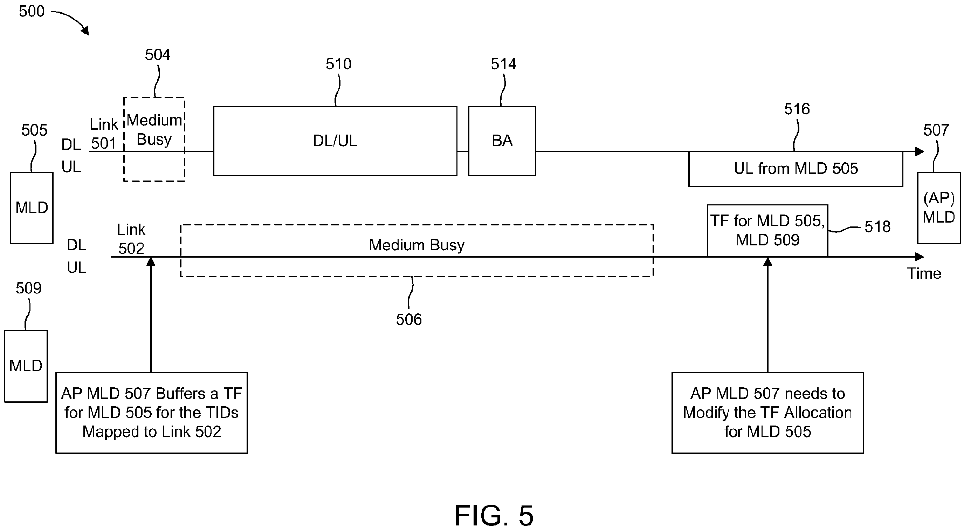

FIG. 5 is a diagram of another example message exchange procedure 500 between MLD 505 and MLD 509 (e.g., non-STR STA MLDs) and MLD 507 (e.g., a STR AP MLD) over multi-directional link 501 and multi-directional link 502. The message exchange procedure 500 illustrates an example real-time change or delay of a buffered frame. During medium busy period 504 in link 501, AP MLD 507 may buffer or queue a trigger frame (TF) on link 502 for MLD 505 and MDL 509 for the UL TIDs mapped to link 502.

The AP MLD 507 may wait until after the medium busy period 506 on link 502 to gain access (e.g., using EDCA) to the channel on link 502 to transmit the TF 518 to MLD 505 and MLD 507. During medium busy period 506 on link 502, UL/DL message transmissions 510 and BAs 514 may be exchanged on link 501. Prior to the AP MLD 507 obtaining EDCA access to link 502 in order to send TF 518, there may be an UL message transmission 516 from MLD 505 on link 501 that would overlap in time with the TF transmission 518 to MLD 505 and MLD 509, which cannot be handled by non-STR MLD 505. In this case, the AP MLD 507 may reassign UL resources on link 502 for TF 518 for MLD 505 to another STA or MLD (i.e., APL MLD 507 may dynamically change the resources used to transmit TF 518). In another example for this case (not shown), the AP MLD 507 may delay the transmission of the TF 518 until after UL transmission 516 on link 501 finishes. In either case, a delay results in the transmission of the queued TF 518 for MLD 505 and MLD 509. In the case of Multi-user EDCA (MU-EDCA), introduced in 802.11ax, MU-EDCA parameters may provide a less aggressive EDCA compared to the EDCA of a TF. In the example of FIG. 5, the MU-EDCA parameters may not help because UL message transmissions 516 from MLD 505 on link 501 and TF 518 for MLD 505 (and MLD 509) on link 502 may be for different TIDs. The UL transmission 516 may not use MU-EDCA parameters for EDCA.

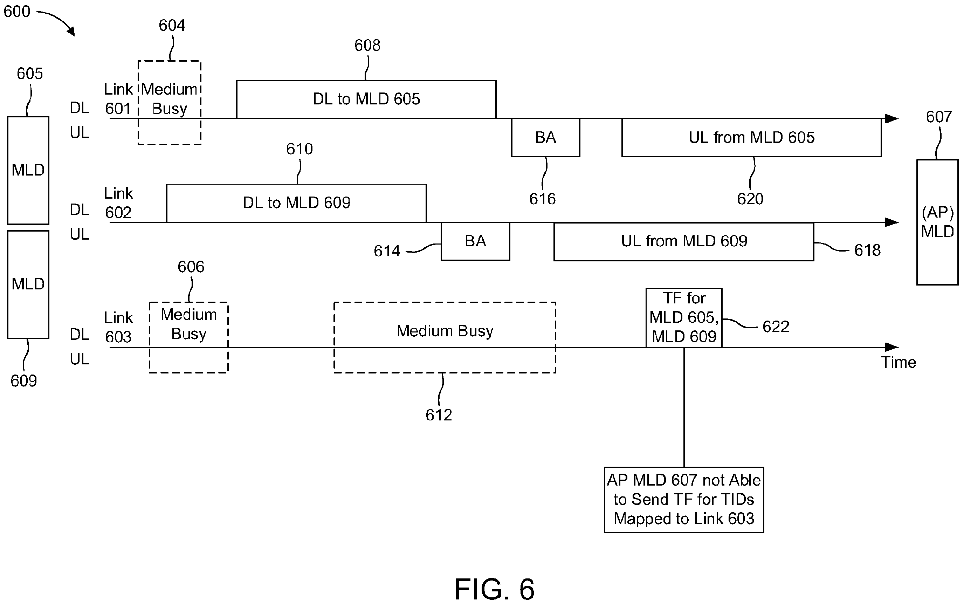

FIG. 6 is a diagram of another example message exchange procedure 600 between MLD 605 and MLD 609 (e.g., non-STR STA MLDs) and MLD 607 (e.g., a STR AP MLD) over multi-directional link 601, multi-directional link 602, and multi-directional link 603. The message exchange procedure 600 illustrates an example competition between DL trigger frame (TF) transmission 622 on link 603 and UL EDCA transmissions 618 and 620 on links 602 and 603. As shown in FIG. 6, UL EDCA transmission 618 from MLD 609, UL EDCA transmission 620 from MLD 605, and/or BA transmissions 614 and 616 from MLDs 609 and 605 respectively, may compete with the transmission of the DL TF 622 from AP MLD 607 to MLD 605 and MLD 609.

Non-STR MLD 605 may be associated with AP MLD 607 on link 601 and link 603. TIDx of MLD 605 may be mapped to link 603, and TIDy of MLD 505 may be mapped to link 601. Non-STR MLD 609 may be associated with AP MLD 607 on link 602 and link 603. TIDx of MLD 609 may be mapped to link 603. TIDy of MLD 609 may be mapped to link 602. Outside of medium busy period 604 on link 601, MLD 605 may receive DL message transmissions 608 from AP MLD 607, and may send BA 616 and UL message transmissions 620 to AP MLD 607. On link 602, MLD 609 may receive DL message transmissions 610 from AP MLD 607, and may send BA 614 and UL message transmissions 618 to AP MLD 607. The AP MLD 607 may not send the TF 622 to MLD 605 and MLD 609 on link 603 during medium busy periods 606 and 612.

To transmit the TF 622 to non-STR MLDs 605 and 609 on link 603, AP MLD 607 may verify that the scheduled trigger-based PPDU (TB-PPDU) on link 603 does not overlap any of the receptions for MLD 605 and MLD 609 on links 601 and 602. AP MLD 607 may verify that the duration of the PPDU carrying TF 622 and a time period of short interframe space (SIFS) after the PPDU do not overlap with any of the UL transmissions 620 and 618 of MLD 505 and MLD 509, respectively.

As illustrated in FIG. 6, AP MLD 607 could not send a TF 622 to MLDs 605 and 609 when sending DL PPDUs 608 and 610 to MLDs 605 and 609 on links 601 and 602. For example, if the end of the PPDU carrying TF 622 is aligned with the end of a DL PPDU 607 to MLD 605, the condition that the PPDUs do not overlap for MLD 609 is violated. If the end of PPDU carrying TF 622 is aligned with the end of DL PPDU to MLD 609, then the condition the PPDUs for MLD 605 is violated. To satisfy both conditions, the AP MLD 607 may align the end of DL PPDUs 608 and/or 610 on multiple links 601 and 602 to multiple 605 and 609, either by padding or fragmentation. In this case, the complexity and overhead increases with the number of STA-MLDs scheduled in the TF 622. Furthermore, there is no guarantee that the medium contention will be successful and allow a PPDU carrying the TF 622 to be sent before the end of aligned PPDUs on other links.

If AP MLD 607 sends TF 622 after DL frame exchange sequences 608 and 610 on other links 601 and 602 for all the MLDs 605 and 609, then any MLD scheduled in the TF 622 having a successful EDCA access on other links (601, 602) before the EDCA access of TF 622 on link 603 may further defer or delay the transmission of TF 622, as shown in FIG. 6. For the TIDs mapped to link 601 and 602 for MLDs 605 and 609, the EDCA on links 601 and 602 may not be subject to the MU-EDCA parameters for the TID mapped to link 603.

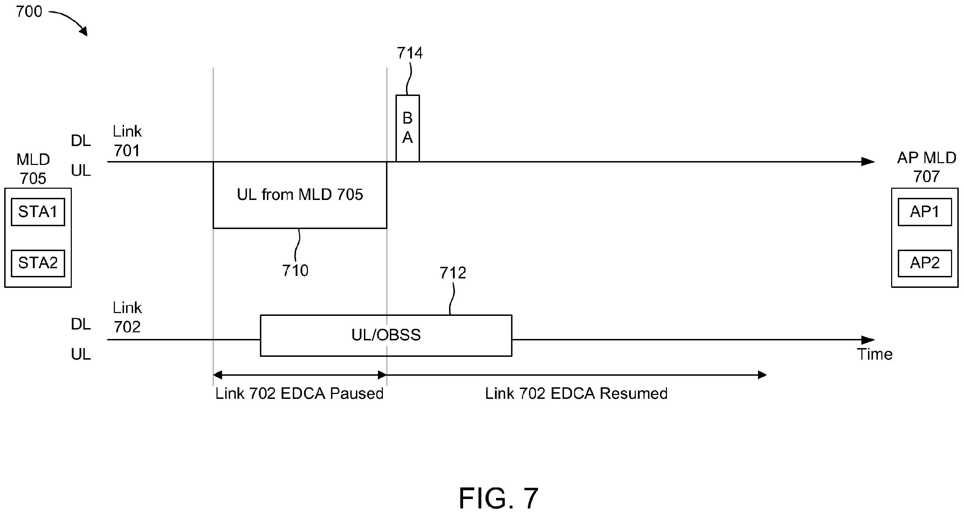

NAV/PPDU length status on a second link (`link 2') after transmission (TX) on a first link (`link 1') is described herein. FIG. 7 is a diagram of another example message exchange procedure 700 between MLD 705 (e.g., non-STR STA MLD) and MLD 707 (e.g., a STR AP MLD) over multi-directional link 701 and multi-directional link 702. The message exchange procedure 700 illustrates an example where STA 2 of MLD 705 for communicating on link 702 loses NAV after UL message transmission 710 by STA 1 of MLD 705 on link 701 (for which AP MLD 707 may send BA 714 on link 701). Because of the STA 1 of MLD 705 transmission on link 701, STA 2 of MLD 705 cannot perform on link 702 clear channel assessment (CCA), preamble detection, and/or decoding NAV information and does not have the updated NAV status/PPDU duration on link 702. When the STA 2 of MLD 705 resumes EDCA on link 702, the STA 2 of MLD 705 may not detect UL transmissions 712 from a hidden node that may be in the BSS or in an overlapping BSS (OBSS) that previously started while the EDCA was paused. Thus, EDCA access by MLD 705 on link 702 may cause collisions on link 702 with other frames whose PPDU duration/NAV was signaled by frames/preambles on link 702 during a time period when MLD 705 was transmitting on link 701.

Mechanisms may be used for link steering and control for multi-link operation. In multi-link operations between two MLDs (e.g., AP MLDs, non-STR AP MLDs, STR AP MLDs, non-AP STAs, non-AP MLDs, single link or single radio MLDs, STR MLDs, or non-STR MLDs), the MLDs may coordinate with each other on which links to use. This coordination may be particularly important in the case of low latency traffic that need support for stringent delay and reliability requirements. Constraints imposed by non-STR AP and/or non-AP MLDs, which can only support concurrent transmission or concurrent receptions, further complicate link steering and control in multi-link operations. Mechanisms are disclosed herein to efficiently and effectively manage, steer and control link usages between MLDs.

In an example, issues may relate to NAV settings of non-primary channel transmission . In an example, a STA may have its NAV setting in its primary (e.g., 20MHz) sub-channel. This NAV setting may limit the usage of non-primary (e.g., 20MHz) sub-channels. For example, a non-AP STA may join a BSS with 80MHz operation. The STA may have capability to operate on the 80MHz channel. The STA may have NAV set based on monitoring over its primary 20MHz sub-channel. Then the STA may not be able to respond to a trigger frame on a secondary 20MHz sub-channel, or a secondary 40MHz sub-channel even if the secondary sub-channels are idle.

In another example, issues may relate to EDCA after triggered access in multi-link operations. MU-EDCA (e.g., in 802.11ax) may have improved efficiency by favoring UL MU transmissions scheduled by the AP. Because a STA is scheduled for UL access by the AP and can also perform EDCA for unscheduled UL access, the AP and the STAs may both contend to access the channel for the same traffic. This may cause collisions and lower the performance of the AP and the STAs. By prioritizing AP traffic and deprioritizing STA traffic (e.g., traffic from 802.11ax STAs), a desired percentage of UL OFDMA/MU transmission can be achieved while keeping a fair percentage of legacy STAs' UL EDCA transmission.

With MU-EDCA, an HE non-AP STA may lower EDCA channel access probability, after the HE non-AP STA is scheduled by the AP. A MU-EDCA timer may be defined for each access category (AC) such that during the timer duration, the STA may reduce the medium/channel contention probability for the AC.

In a Multi-Link Operation (MLO), a non-AP MLD may be scheduled for UL access on any links where the UL TID is mapped to, based on the UL buffer status of the non-AP MLD. Based on the mechanism, a link A which has a successful TB-PPDU transmitted for an AC may reduce the priority for medium contention for that AC. At the non-AP STA side, this may effectively redirect UL traffic to other links B and C for more aggressive EDCA access before the non-AP MLD performing successful TB-PPDU transmission on these other links. AP MLD may be aware of the congestion status of different links and the buffer status of the non-AP MLD, which may have included buffer status report (BSR) in the headers of medium access control (MAC) protocol data unit (MPDU) in the previously transmitted TB-PPDU. Assuming that links B and C are congested, the AP may only schedule UL access on link A and for the non-AP MLD to avoid EDCA access on the links B and C. However, because EDCA priority reduction only happens on link A, this may provide more opportunity for the non-AP MLD to perform (e.g., collided) access on the links B and C, which may further increase the congestion.

BSR control information in HE A-Control subfield may not be able to identify the TID of buffered traffic. In an example BSR control subfield, access category index (ACI) bitmap subfield and delta TID subfield may be used to indicate buffer status of one or more access categories (ACs) are included in the queue size all subfield. In an example, if one bit in ACI bitmap subfield (corresponding to AC1) may indicate traffic corresponding to TID1 and TID2, such that TID1 may be mapped to link 1 and TID2 may be mapped to link 2. If the BSR in the HE A-control subfield has one bit in ACI bitmap subfield set to '1' and the delta TID subfield set to '0' (indicating that one TID has buffered traffic), the AP may not be able to determine which TID is requesting scheduling and may not know on which link to send a trigger frame for the buffered AC1.

UL MU transmission (data) disable mechanisms may be defined, for example in 802.11ax, for in-device multiple radio co-existence by performing regular EDCA access instead of triggered access. For example, a STA (having multiple radios) not scheduled for UL access by a TF, may handle the coexistence internally by choosing not to transmit during periods that another radio is receiving, or by reducing the transmit power (and/or lowering the modulation and coding scheme (MCS)) if another radio is receiving. If the STA is scheduled by the TF for UL access, the STA side control may be lost and co-existence may be an issue.

In an example, for a non-AP MLD, if link 1 has a co-existence issue and disables UL MU transmission (data), the AP MLD may still schedule triggered access on another link 2 that has no co-existence issue. Using a regular EDCA access on link 1 may unintentionally steer the traffic to link 1 because link 1 uses regular EDCA, which may have higher EDCA access priority than link 2 using MU-EDCA parameters.

Mechanisms may be defined for prohibiting non-default TID-to-link mapping for low latency TIDs.

As described above, link access competition may arise when the access of a more urgent PPDU on link 2 is blocked by transmission activity of link 1. In an example solution, more urgent PPDUs may be allowed to contend for medium access on link 1 in addition to link 2. A traffic identifier (TID) and/or traffic stream identifier (TSID) (TID/TSIDs) satisfying certain criteria may be prohibited from being mapped to a subset of links. In this case, the TIDs satisfying certain criteria may be mapped to all links that have non-STR constraint. Examples of criteria may include, but is not limited to: delay constraint, priority, and/or identities of TID/TSIDs. In an example, for a TID mapped to link 2, a quality of service (QoS) null frame of the TID may still be allowed to be transmitted on the links that the TID is not mapped to. The QoS null frame may be aggregated with a control response frame, or sent individually to contend for medium access on link 1.

Multi-link steering and control procedures may be used to address competition between DL transmissions to a non-STR MLD on link A and UL EDCA transmission from the on-STR MLD on link B.

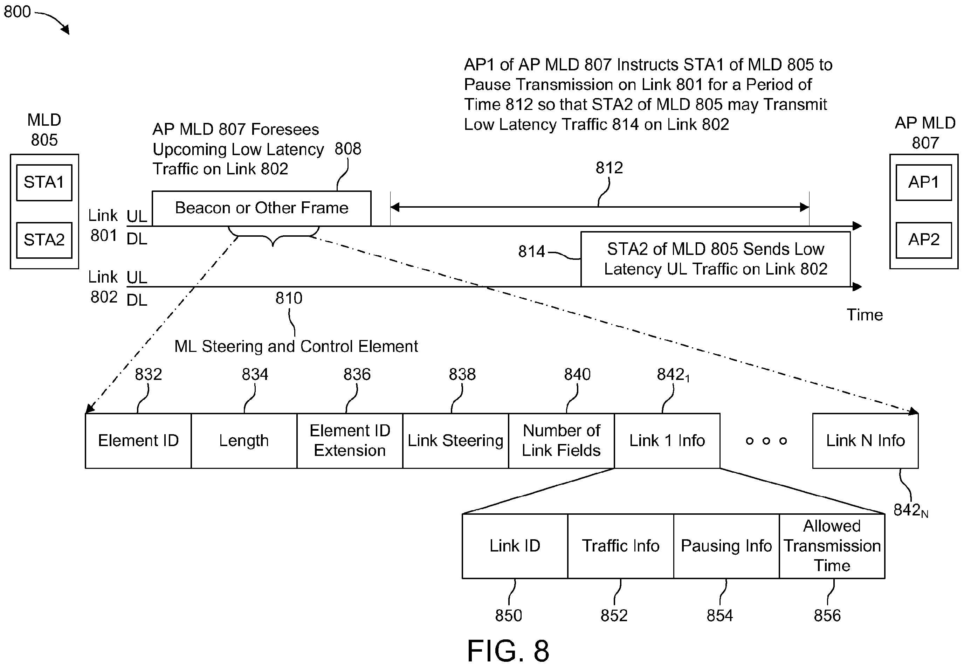

FIG. 8 is a diagram of an example multi-link steering and control procedure 800 between MLD 805 (e.g., non-STR STA MLD) and MLD 807 (e.g., a STR AP MLD) over multi-directional link 801 and multi-directional link 802. STA 1 of MLD 805 communicates over link 801, and STA 2 of MLD 805 communicates over link 802, and similarly AP1 of AP MLD 807 communicates over link 801 and AP2 of AP MLD 807 communicates over link 802. The procedure 800 includes an example design of a multi-link steering and control element 810 (equivalently multi-link element 810), that may be part of beacons or other type of frames 808 transmitted by AP1 of AP MLD 807 on link 801. In an example, the AP MLD 807 may be aware of upcoming low latency traffic (traffic with an associated low latency requirements) to be transmitted on link 802. In this case, AP MLD 807 may indicate to STA1 of MLD 805 on link 801 to pause or delay transmission (and/or reception) on link 801 for an indicated period of time 812. The AP MLD 807 or STA MLD 805 may include this indication in a beacon or frame 808 as part of, for example, multi-link steering and control information, which may be implemented as a multi-link steering and control element 810 (e.g., in the pausing information field 854). During period 812 when MLD 805 (e.g., STA1 of MLD 805) has paused transmission/reception on link 801, MLD 805 (e.g., STA2 of MLD 805) may send low latency UL messages 814 on link 802. Frame 808 may be transmitted by an AP affiliated with AP MLD 807, however, a similar procedure may be applied to a STA affiliated with another STA MLD (not shown).

All parts of information, field, subfields, or subsets of the multi-link (ML) steering and control element 810 may be implemented as fields, subfields of any new or existing element, fields, medium access control (MAC) or PLCP headers, or any control, data, management or other type of frame. The multi-link steering and control element 810 may include, but is not limited to, one or more of the following fields or subfields: element identifier (ID) field 832, length field 834, element ID extension field(s) 836, link steering field 838, number of link fields field 840, and/or link information (info) fields 842₁ to 842_{N}.

The Element ID field 832 and the element ID extension field 836 may be combined to indicate that the ML element 810 is a ML steering and control element.

The length field may indicate the length of the ML element 810. The link steering field 838 may be used to indicate whether a receiving STA or a non-AP MLD or a receiving MLD is recommended or directed to use one or more links. In an example, the link steering field 838 may be implemented as a bitmap, with each bit indicating a link that should be used. In another example, the link steering field 838 may be implemented as multiple subfields, where each subfield may contain the ID of the links recommended or directed. An AP or an AP MLD may use link steering field 838 to recommend or direct a receiving STA, a STA of a single link radio, or a STA of a non-AP MLD or a non-AP MLD to activate or monitor one or more links that may be set up or may be available. A STA or a non-AP MLD may use link steering field 838 to recommend or direct a receiving STA, an AP, or an AP of an AP MLD or an AP MLD to activate or monitor one or more links that may be set up or may be available.

The link steering subfield 838 may include one or more STA IDs, such as MAC addresses or associate IDs (AIDs) to indicate that one or more STAs that are steered or directed to activate one or more links. In addition, for non-STR STAs, the steering implies that the STA or MLD shall stop transmitting in the uplink on its current active links. The link steering subfield 838 may carry an indication of reverse trigger. If the reverse trigger is indicated by the link steering subfield 838, then a STA or MLD that has stopped transmitting in the current link may transmit a reverse trigger when the new link is activated, the reverse trigger may be an indication for the transmitting MLD to conduct transmission. A reverse trigger may be implemented by control, management or data frames, (e.g., a power save-poll (PS-Poll) frame or a data frame). The Number of link fields field 840 may indicate the number of link fields N contained in the ML steering and control element 810.

Each link field 842₁ to 842_{N} may include information or control information for each links in the set of links. The set of links may include the links that are set up between the AP MLD and the non-AP MLD or a single link MLD. The set of links may be links that are supported by the AP MLD, or the set of the links that are supported by the non-AP MLD. The set of the links may be the links that are active at the AP MLD, or the links that are active at the single link MLD or the non-AP MLD. Each link field 842₁ to 842_{N} may include, but is not limited to, one or more of the following information: Link ID subfield 850, traffic information (info) subfield 852, pausing information (info) subfield 854, and/or allowed transmission time field 856. Link ID subfield 850 may indicate the ID of the respective link, and may use as an indication for example an integer, a channel number of the primary channel of the link, or any other type of identifier.

The traffic info subfield 852 may indicate the amount of traffic anticipated or buffered at AP MLD 807 (i.e., the MLD that transmitted frame 808) at the link as well as traffic priorities and/or traffic delays. For example, each traffic info subfield 852 may include a number of subfields (not explicitly shown) corresponding to access categories, or corresponding to a priority such as low latency traffic. Each subfield of traffic info subfield 852 may be one bit to indicate that there is traffic of the corresponding category (e.g., AC and/or priority) buffered at the transmitting STA MLD. Each subfield of traffic info subfield 852 may include detailed information of how much traffic is buffered, or the delay associated with the corresponding AC traffic or priority. In an example, only the traffic with the highest priority or the strictest delay requirements may be indicated in the traffic info field 852. In another example, only the traffic info field 852 is indicated for the links that the transmitting STA MLD or AP MLD is recommending or directing the receiving STAs/MLDs in the link steering field 838. In another example, the traffic info field 852 may be indicated in the order of the active links supported by or set up between the transmitting and receiving STAs or MLDs; in this case, an explicit Link ID 850 may not be included.

The pausing info field 854 may be used to indicate to the receiving STA MLD 805 to pause its transmission on the same link (link 801) for an indicated period of time 812. The period of time during which the receiving STA/MLD pauses (e.g., the pausing time) may permit other STAs/MLDs or the AP/MLD to access the medium. The pausing time may allow the AP or STA or MLDs to transmit to the receiving STAs on one or more links (e.g., in the case that the receiving STA may be a non-STR AP MLD or non-STR non-AP MLD). The allowed transmission time field 856 may indicate a contiguous allowed transmission time to be used by one or more receiving STAs or MLDs on a particular link and/or the indicated link in the link ID 850.

The traffic info field 852, pausing info field 854, and allowed transmission time field 856 may be designed differently. For example, each of the traffic info field 852, pausing info field 854, and allowed transmission time field 856 may include multiple subfields, such that each of the subfields is associated with a particular link (e.g., links that are set up between the transmitting and receiving STAs or MLDs, or supported by the transmitting STA or MLD). In some cases, the link ID field 850 may not explicitly be used or needed.

As shown in FIG. 8, the multi-link steering and control procedures 800 may include the AP or AP MLD 807 sending a beacon, short beacon, FILS discovery frames, or other type of management or control frames to one or more STAs or MLDs or group of MLDs (including STA MLD 805). The beacon or other frames 808 may include the ML steering and control element 810 that a receiving STA MLD 805 may use to be steered or directed to one or more links as indicated in the link steering field 838. If more than one link is indicated in the sink steering field 838 for a single-link MLD, it may imply that the single-link MLD may monitor the set of multiple links. If more than one link is indicated in the link steering field 838 for a non-STR MLD, it may imply that the non-STR MLD may monitor multiple links. If the link steering subfield 838 indicates reverse trigger for a non-STR MLD, the non-STR MLD may transmit a reverse trigger, for example, a trigger frame or a PS-Poll frame, that may be transmitted concurrently in the UL, in a synchronized or link aggregated manner. If more than one link is indicated in the link steering field 838 for STR MLD, it may imply that the STR MLD may monitor the set of links. If the link steering subfield 838 indicates reverse trigger for a STR MLD, the STR MLD may transmit a reverse trigger, for example, a trigger frame or a PS-Poll frame. The reverse trigger frame may be used to trigger transmission for a receiving MLD. The reverse trigger frames may be transmitting concurrently in the UL, in a synchronized or link aggregated manner. The reverse trigger frames may be transmitted individually in each of the links at the earlier time of channel access in that link.

An AP or AP MLD may include the ML steering and control element 810 in any type of management or control frames addressed to a particular STA or MLD to indicate that it is directing or steering the STA or MLD to one or more links as indicated in the link steering field 838. If more than one link is indicated in the link steering field 838 for a single link MLD, it may imply that the single link MLD may monitor the set of links. If the link steering subfield 838 indicates reverse trigger, then the single link MLD may transmit a reverse trigger to trigger the transmission to that single link MLD if it was successful to access the medium on one or more the links. If more than one link is indicated in the ink steering field 838 for a non-STR MLD, it may imply that the non-STR MLD may monitor the set of links. If the link steering subfield 838 indicates reverse trigger for a non-STR MLD, the non-STR MLD may transmit a reverse trigger, for example, a trigger frame or a PS-Poll frame, that are transmitting concurrently in the UL, in a synchronized or link aggregated manner. If more than one link is indicated in the link steering field for STR MLD, it may imply that the STR MLD may monitor the set of links. If the link steering subfield 838 indicates reverse trigger for a STR MLD, the STR MLD may transmit a reverse trigger, for example, a trigger frame or a PS-Poll frame. The reverse trigger frame may be used to trigger transmission to MLD. The reverse trigger frames may be transmitting concurrently in the UL, in a synchronized or link aggregated manner. The reverse trigger frames may also be transmitted individually in each of the links at the earlier time of channel access in that link.

An AP or MLD may transmit a frame 808 including a ML steering and control element 810 to indicate traffic load on one or more links to one or more STAs or MLDs. It may provide information regarding the amount of buffered traffic and/or the priority and delay associated with the traffic on one or more links. Such information may be included in data frames, for example in a MAC and/or PLCP header, or aggregated in an aggregated MAC Protocol Data Unit (A-MPDU) or in a BA or multi-STA BA (M-BA) or other type of response frames to inform the receiving STAs of potentially more pressing traffic on one or more links. In another design, the TIDs of the buffered traffic may be indicated and the receiving STA or MLD may be able to determine which link to monitor based on a TID-to--link mapping the STA or MLD has established. A non-STR STA or MLD may stop its current transmission on its current active links to monitor the links of its choosing, potentially selecting the highest priority data or low latency data as indicated in the ML steering and control element 810. The non-STR MLD may also transmit one or more reserve trigger frames on one or more links of its choosing. The reverse trigger frames may be PS-Poll or trigger frame, and may be transmitted in a synchronized manner on more than one links concurrently.

An AP or MLD may transmit frame 808 including a ML steering and control element 810 to indicate pausing time duration (in pausing info field 854) on one or more links to one or more STAs or MLDs. A STA or MLD, for example, a non-STR MLD, receiving the ML steering and control element 808 including a pausing time for one or more links may stop accessing the medium for at least the time indicated in the pausing time on the indicated links. The STA or MLD may switch to monitor the links indicated in the link steering field 838. The pausing time may start after the receiving STA or MLD has finished transmitting its current frame or completed its current TXOP.

An AP or MLD may transmit frames 808 including a ML steering and control element 810 to indicate an allowed transmission time (in the allowed transmission time field 856) on one or more links to one or more STAs or MLDs. A STA or MLD, for example, a non-STR MLD or a single link MLD or STR MLD, receiving a ML steering and control element 810 including an allowed transmission time indication 856 for one or more links, it may reduce its maximum transmission time or TXOP to be less than that indicated in the allowed transmission time field 856.

As described with respect to the multi-link steering and control procedure 800 in FIG. 8, a non-AP STA or non-AP MLD may conduct multi-link steering and control in any of the following example procedures. In an example, a non-AP STA or a non-AP MLD may include a ML steering and control element in data frames (e.g., in the header), or other type of management or control frames that a STA or MLD should be steered or directed to one or more links as indicated in the link steering field. If more than one link is indicated in the link steering field for a non-STR MLD, it may imply that the non-STR MLD may monitor the set of links. If a reverse trigger is indicated for a non-STR MLD, the non-STR MLD may transmit a reverse trigger, for example, a trigger frame or a PS-Poll frame, that are transmitting concurrently in the UL, in a synchronized or link aggregated manner to trigger transmission from the transmitting STA or MLD. If more than one link is indicated in the link steering field for an STR MLD, it may imply that the STR MLD may monitor the set of links. If reverse trigger is indicated for a STR MLD, the STR MLD may transmit a reverse trigger, for example, a trigger frame or a PS-Poll frame. The reverse trigger frame may be used to trigger transmission to the MLD. The reverse trigger frames may be transmitted concurrently in the DL, in a synchronized or link aggregated manner. The reverse trigger frames may also be transmitted individually in each of the links at the earlier time of channel access in that link.

A non-AP STA or a non-AP MLD may include the multi-link steering and control element (equivalently multi-link element) in any type of management or control frames addressed to a particular STA or MLD to indicate that it is directing or steering the AP or MLD one or more links as indicated in the link steering field. If more than one link is indicated in the link steering field for a non-STR MLD, it may imply that the non-STR MLD may monitor the set of links. If reverse trigger is indicated for a non-STR MLD, the non-STR MLD may transmit a reverse trigger, for example, a trigger frame or a PS-Poll frame, that are transmitting concurrently in the DL, in a synchronized or link aggregated manner. If more than one link is indicated in the link steering field for STR MLD, it may imply that the STR MLD may monitor the set of links. If reverse trigger is indicated for a STR MLD, the STR MLD may transmit a reverse trigger, for example, a trigger frame or a PS-Poll frame. The reverse trigger frame may be used to trigger transmission to an MLD. The reverse trigger frames may be transmitted concurrently in the UL, in a synchronized or link aggregated manner. The reverse trigger frames may also be transmitted individually in each of the links at the earlier time of channel access in that link.

A non-AP STA or non-AP MLD may transmit a frame including a ML steering and control element to indicate traffic load on one or more links to one or more STAs or MLDs. The ML steering and control element may provide information regarding the amount of buffered traffic and/or the priority and delay associated with the traffic on one or more links. Such information may be included in data frames, for example in the MAC/PLCP header, or aggregated in an A-MPDU or in BA or M-BA or other type of response frames to inform the receiving STAs of potentially more pressing traffic on one or more links. In an example, the TIDs of the buffered traffic may be indicated and the receiving STA or MLD may be able to figure which link to monitor based on TID-to-kink mapping that the STA or MLD has established. A non-STR STA or MLD may stop its current transmission on its current active links to monitor the links of its choosing, potentially with the highest priority data or low latency data as indicated in the ML steering and control element. The non-STR MLD may also transmit one or more reserve triggers on one or more links of its choosing. The reverse trigger may be PS-Poll or trigger frame, and may be transmitted in a synchronized manner on more than one links concurrently.

A non-AP STA or non-AP MLD may transmit a frame including a ML steering and control element to indicate a pausing time on one or more links to one or more STAs or MLDs. A STA or MLD, for example, a non-STR MLD, receiving a ML steering and control element indicating a pausing time for one or more links, may stop its medium access for at least the indicated pausing time on the associated links. The STA or MLD may switch to monitor the links indicated in the link steering field of the ML steering and control element. The indicated pausing time may start after the receiving STA or MLD has finished transmitting its current frame or completed its current TXOP.

A non-AP STA or a non-AP MLD may transmit frames including a ML steering and control element to indicate allowed transmission time on one or more links to one or more STAs or MLDs. A STA or MLD, for example, a non-STR MLD or a single link MLD or STR MLD, receiving a ML steering and control element including an allowed transmission time for one or more links may reduce its maximum transmission time or TXOP to be less than the indicated duration in the allowed transmission time field.

Embodiments for quick-trigger-enabled TWT are described herein.

Mechanisms for trigger-enabled target wake time (TWT) may be used to prohibit EDCA, which may be useful to resolve competition between DL transmission to a non-STRU MLD on a first link and UL EDCA transmission on a second link, and/or NAV/PPDU length status on a second link after transmission on first link. A TWT-requesting STA may not transmit frames to the TWT responding STA outside of negotiated TWT scheduling periods (SPs) and should not transmit frames that are not included within HE TB PPDUs to the TWT responding STA within trigger -enabled TWT SPs. In an example, an AP MLD may add an indication on link 1 to indicate a quick-trigger-enabled TWT on link 1, in order to provide access opportunity for DL TIDy or trigger frame on link 2. AP MLD may add an indication on link 1 to indicate a quick-trigger-enabled TWT on link 2.

In a quick-trigger-enabled TWT, as an alternative to entirely stop EDCA access, a set of alternative EDCA parameters may be used to perform (less aggressive) EDCA. Examples of alternative EDCA parameters include, but are not limited to: a longer contention widow, a larger interframe space, or a different CCA threshold. Quick-trigger-enabled TWT may be performed on the same link as described herein.

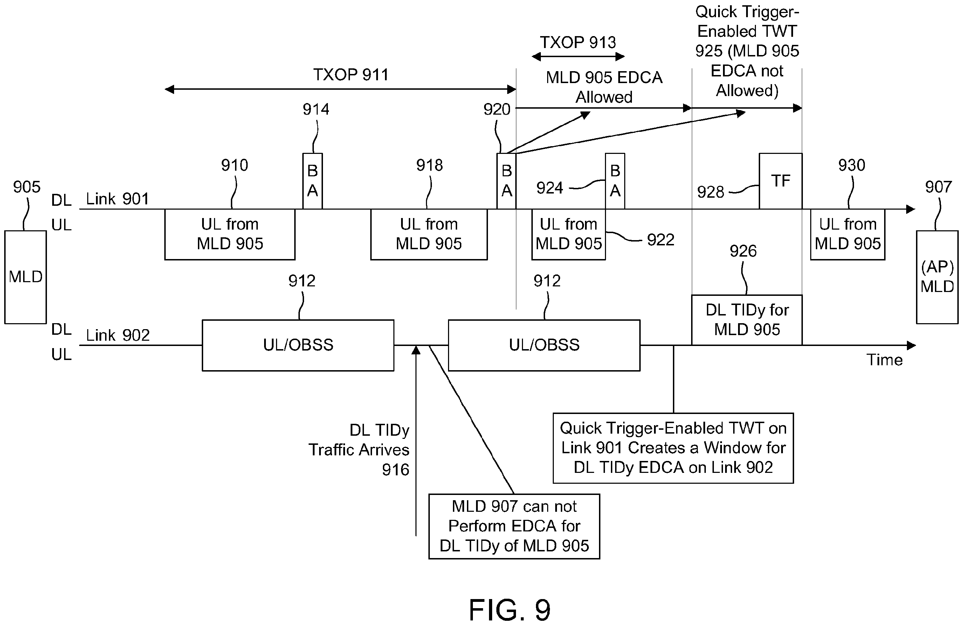

FIG. 9 is a diagram of an example message exchange procedure 900 between MLD 905 (e.g., a non-STR STA MLD) and MLD 907 (e.g., a STR AP MLD) over multi-directional link 901 and multi-directional link 902. The message exchange procedure 900 illustrates an example quick-trigger-enabled TWT 925 assigned by a TXOP responder. For example, a quick-trigger-enabled TWT 925 may be assigned by the AP MLD 907, which may address the issue described in FIG. 2 by reducing the delay incurred by high priority TIDy DL traffic from MLD 905 on link 902.

Similar example scenario described in FIG. 2, during time periods when TIDs of MLD 905 are used by the MLD 905 to send UL messages 910 on link 901 (which may be acknowledged by AP MLD 907 sending BAs 914, 920), AP MLD 907 may suspend EDCA for TIDy for MLD 905 on link 902. During the time periods that MLD 905 is sending UL messages 910 on link 901 using TIDs, other OBSS/UL STAs (not shown) may occupy the medium (channel) on link 902 by sending UL messages 912 on link 902 and may continue transmitting when MLD 905 on link 901 is idle, delaying AP MLD 907 from perform EDCA for TIDy.

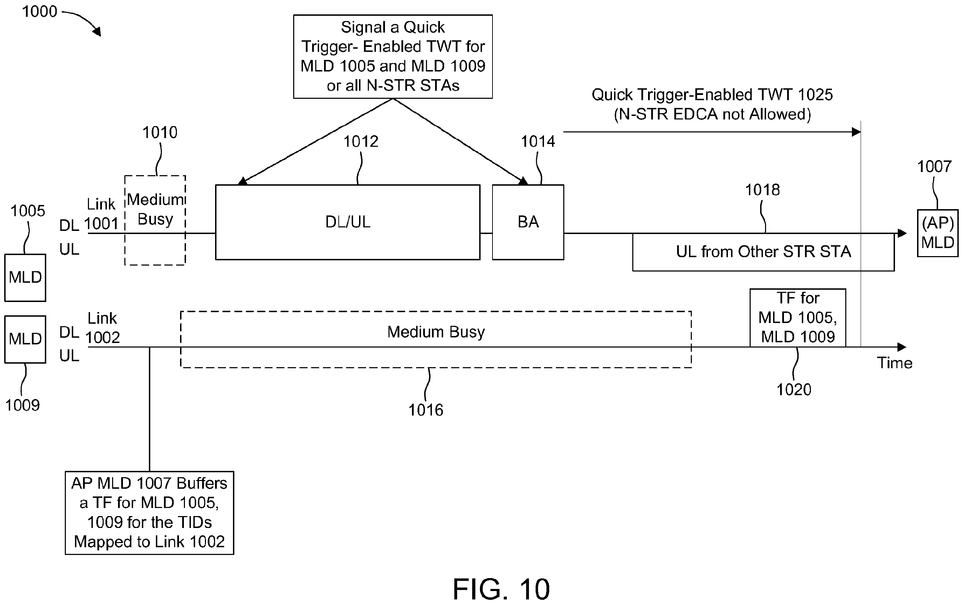

In an example, the AP MLD 907 may provide to MLD 905 information for enabling a TWT 925. The information to enable TWT 925 may be included in a PPDU carrying a solicited frame, such as BA 920 transmitted from AP MLD 907 to MLD 905 on link 901, or in a PPDU carrying a soliciting frame (e.g., DL/UL frame 1012 on link 1001 shown in in FIG. 10). The information for enabling a TWT 925 may include, but is not limited to include, any of the following information: a quick-trigger-enabled TWT indication; an end time and/or duration of a quick-trigger-enabled TWT 925 for the current link 901 or an indicated link (e.g., link 901 or 902); a start time of a quick-trigger-enabled TWT 925 for the current link 901 or an indicated link; identities (IDs) of link 901 STA MLDs that may apply or follow the quick-trigger-enabled TWT 925 (e.g., ID of MLD 905); IDs of link 902 that may be used by AP MLD 907 to send PPDU(s) to the STA MLD 905; TID/TSID on link 902 that may be used by AP MLD 907 to send PPDU(s) to the STA MLD 905; an indication if other links (e.g. link 903, not shown) also have the same quick-trigger-enabled TWT 925 as in link 901; alternative EDCA parameters; and/or criteria to exit the TWT 925 early.

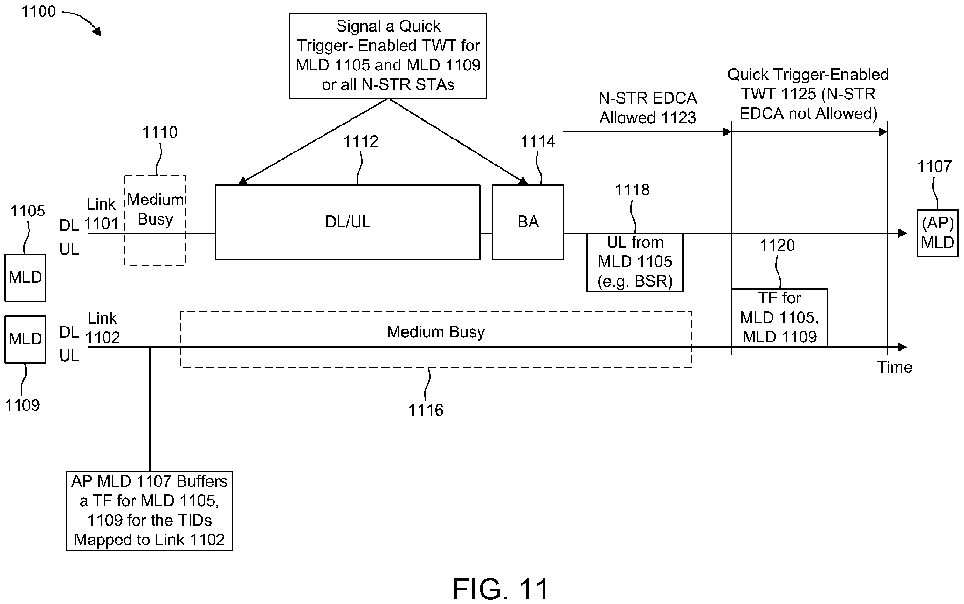

The STA MLD 905 on link 901 may resume its EDCA following the end of the TXOP 911 that has a PPDU (e.g., BA 920) carrying the quick-trigger-enabled TWT indication ("MLD 905 EDCA allowed" as shown in FIG. 9, or "N-STR EDCA allowed" as shown in FIG. 11). If the non-STR MLD 905 applying the quick-trigger-enabled TWT acquires a TXOP 913 before the TWT 925, the TXOP may end before the start time of the quick-trigger-enabled TWT 925.

The duration of "MLD 905 EDCA allowed" on link 901 shown in FIG. 9 (or the duration of "N-STR EDCA allowed" shown in FIG. 11), may be derived from the pending NAV/PPDU duration on link 902, plus the remaining EDCA counter for link 902 at the AP MLD 907 ( i.e., the link 902 AP MLD 907 may not transmit before the end of the duration of MLD 905 EDCA allowed"). During the "MLD 905 EDCA allowed" period, MLD 905 may send UL messages 922 to AP MLD 907, and may receive BA 924 prior to the start of the TWT 925.

The quick-trigger-enabled TWT 925 may be applicable to the non-STR STA MLD 905 associated with the receiver address (RA) of the solicited frame (e.g., BA 920), and may be referred to as the solicited frame quick-trigger-enabled TWT. The quick-trigger-enabled TWT 925 may be applicable to the non-STR STA MLD 905 associated with the RA of the soliciting frame (e.g., DL/UL frame 1012 in FIG. 10), and may be referred to as the soliciting frame quick-trigger-enabled TWT. The quick-trigger-enabled TWT 925 may be applicable other or all non-STR STA MLDs (including additional STA MLDs not shown) operating on link 901, and may be referred to as a third-party quick-trigger-enabled TWT (examples of which are shown in FIGs. 10 and 11, described below). During the TWT 925, the MLD 905 may receive from the AP MLD 907 DL messages 926 for TIDy, and the AP MLD 907 may send TF 928 to MLD 905 (and/or other STA MLDs not shown). After the TWT 925, the MLD 905 may resume sending UL messages 930 on link 901 to AP MLD 907 using TIDs.

FIGs. 10 and 11 are examples of third party quick-trigger-enabled TWT. FIG. 10 is a diagram of an example message exchange procedure 1000 between MLD 1005, MLD 1009 (e.g., non-STR STA MLDs) and MLD 1007 (e.g., a STR AP MLD) over multi-directional link 1001 and multi-directional link 1002. Other MLDs/OBSS (not shown) may use the medium, as reflected by medium busy period 1010 on link 1001 and medium busy period 1016 on link 1002. In an example, DL/UL PPDU 1012 and BA 1014 on link 1001 may not be transmitted or intended to be received by the MLD 1005 or MLD 1009. A transmitter of a PPDU 1012 which carries a soliciting frame may signal in the PPDU (e.g. in the preamble of the PPDU) that a solicited frame responding to the PPDU (e.g., a PPDU carrying BA 1014) may carry a quick-trigger-enabled TWT indication. The transmitter of the PPDU carrying the soliciting frame may be a STR non-AP MLD (not shown), in other words a third party quick-trigger-enabled TWT. During the triggered TWT 1025, and once the medium on link 1002 is longer busy, the AP MLD 1007 may send to MLD 1005 and MLD 1009 a TF 1020 on link 1002 (the TF 1020 may have been previously buffered by AP MLD 1007 for MLDs 1005, 1009 for TIDs mapped to link 1002). During the triggered TWT 1025, other STR STA MLDs (not shown) may send UL messages 1018 to AP MLD 1007 on link 1001.

FIG. 11 is a diagram of an example message exchange procedure 1100 between MLD 1105, MLD 1109 (e.g., non-STR STA MLDs) and MLD 1107 (e.g., a STR AP MLD) over multi-directional link 1101 and multi-directional link 1102. Other MLDs/OBSS (not shown) may use the medium, as reflected by medium busy period 1110 on link 1101 and medium busy period 1116 on link 1102. In an example, DL/UL PPDU 1112 and BA 1114 on link 1101 may not be transmitted or intended to be received by the MLD 1105 or MLD 1109. A transmitter of a PPDU 1112 which carries a soliciting frame may signal in the PPDU (e.g. in the preamble of the PPDU) that a solicited frame responding to the PPDU (e.g., a PPDU carrying BA 1114) may carry a quick-trigger-enabled TWT indication. The transmitter of the PPDU carrying the soliciting frame may be a STR non-AP MLD (not shown), in other words a third party quick-trigger-enabled TWT. During the triggered TWT 1125, which beings after the medium on link 1102 is longer busy, the AP MLD 1107 may send to MLD 1105 and MLD 1109 a TF 1120 on link 1102 (the TF 1110 may have been previously buffered by AP MLD 1107 for MLDs 1105, 1109 for TIDs mapped to link 1102). During a period of time 1123 where N-STR EDCA is allowed, prior to the start of the triggered TWT 1025, other STR STA MLDs (not shown) may send UL messages 1118 (e.g., BSR) to AP MLD 1107 on link 1101.

In the examples described herein (e.g., such as the examples in FIGs. 9, 10 and 11), if the PPDU carrying the quick-trigger-enabled TWT indication is a legacy PPDU (e.g., a non-HT (duplicate) PPDU which carries a solicited BA frame), the solicited BA frame may be a multi-STA BA (MBA) frame. In an example, an ack type value (e.g., a reserved ack type value) may be used to signal the presence of a quick-trigger-enabled TWT indication that follows an AID TID info field in the BA frame. In an example, an AID11 field of an AID TID info field may be used to specify whether the frame is a solicited frame quick-trigger-enabled TWT (e.g., set to AID of the unicast receiver of the solicited frame), or a third party quick-trigger-enabled TWT (e.g., set to a broadcast AID). A (non-STR) STA of an MLD operating on link 1 (a first MD link) may be required to read the MBA frame not in response to its own transmission for the indication of a third party quick-trigger-enabled TWT.

In the examples described herein (e.g., such as the examples in FIGs. 9, 10 and 11), if the PPDU carrying the quick-trigger-enabled TWT indication is a legacy PPDU (e.g., a non-HT (duplicate) PPDU which carries a solicited frame), the solicited frame may be a control wrapper frame. The control wrapper frame may include an HT control field, which can be used to signal quick-trigger-enabled TWT indication. The quick-trigger-enabled TWT may have pre-negotiated parameters. A non-STR STA MLD operating on link 1 may be required to read the HT control field even it is not addressed by the control wrapper frame, for the indication of a third party quick-trigger-enabled TWT. The control wrapper frame may have a first address set to a broadcast address and may include an MBA in which the AID of the intended STA for the BA is signaled, while a third-party STA may parse the HT control field of the control wrapper frame.

In the examples described herein (e.g., such as the examples in FIGs. 9, 10 and 11), if the PPDU carrying the quick-trigger-enabled TWT indication is a legacy PPDU (e.g., a non-HT (duplicate) PPDU which carries a solicited frame), the NAV of the MPDU in the PPDU may be set to a value smaller than or equal to an interframe spacing (IFS) (e.g., short IFS (SIFS), arbitrary IFS (AIFS), or distributed coordination function (DCF) IFS (DIFS)) to serve as an implicit indication for a quick-trigger-enabled TWT. The quick-trigger-enabled TWT may have pre-negotiated parameters. The NAV duration may signal whether it is a solicited frame quick-trigger-enabled TWT, or a third party quick-trigger-enabled TWT, and/or other parameters related to the TWT described herein.

In further examples, the quick-trigger-enabled TWT indication may be signal in PHY preamble, or in in one or more bits in the scrambler initiation not used by BW signaling. The quick-trigger-enabled TWT indication may be in a separate frame aggregated with the solicited/soliciting frame addressed to the same STA in an AMPDU. The indication may be in a separate frame addressed to other (non-STR) STAs (e.g., broadcast) than the RA of the solicited/soliciting frame, and the frames may be included in a MU-PPDU. The quick-trigger-enabled TWT indication may be a field in the soliciting/solicited frame. The indication may be a field in a frame carrying no data such as a QoS null frame. The frame carrying no data may be addressed to the RA of the soliciting/solicited frame or addressed to other non-STR STA (e.g., broadcast). A quick-trigger-enabled TWT not preceded by a period in which EDCA may be allowed for non-STR STAs on link 1. The OTHER MLD(S) may be a THIRD party to the DL/UL/BA exchange on link 1.

The quick-trigger-enabled TWT parameters may be pre-negotiated. With pre-negotiated parameters, the quick-triggered TWT indication may be shortened. The shortened indication may signal the start of the TWT, or the start of the EDCA allowed period preceding the TWT. The pre-negotiated parameters may be all or subset of the parameters related to the quick-trigger-enabled-TWT. The pre-negotiated parameters may include, but are not limited to include: TWT duration; unit/scaling factor of the TWT duration; ID of link 2 on which AP MLD wishes to send a PPDU to the STA MLD; indication of whether other links (e.g., a link 3) also has the same quick-trigger-enabled TWT as in link 1; and/or criteria to early exit the TWT. If the unit of TWT duration is pre-negotiated, then the quick-triggered-TWT indication may include a number x, and the actual TWT duration may be x times the unit of TWT duration. An example of criteria to early exit the TWT may be that if the MLD receives a DL PPDU from the AP on link 2 after TWT on link 1 starts, it may exit the TWT and starts EDCA on link 1. The criteria may have additional restrictions. For example, the restriction may be DL PPDU is addressed to the STA of the MLD on link 2, if the TWT is a soliciting/solicited frame quick-trigger-enabled TWT.

A TXOP responder (e.g., AP MLD) may request a link 1 STA of an MLD (i.e., TXOP holder) to allocate additional time in the TXOP (i.e., duration/NAV in the soliciting frame) for the transmission of the responding PPDU which carries the solicited frame and the quick-triggered-TWT indication. For example, if it is a solicited frame quick-triggered-TWT, the quick-triggered-TWT indication may be carried in a control wrapper frame in a non-HT (duplicate) PPDU, and the STA transmitting the soliciting frame may take into the account of the size of the control wrapper frame when allocating NAV. Similarly, if it is a solicited frame quick-triggered-TWT, the quick-triggered-TWT indication may be carried in a separate frame, and both frames may be carried in a PPDU allowing AMPDU as payload, and the STA transmitting the soliciting frame may take into the account of the size of the AMPDU when allocating NAV. Similarly, if it is a third party quick-triggered-TWT with TWT indication carried in a separate frame located in a RU in the solicited MU-PPDU, then the STA transmitting the soliciting PPDU may take into the account of the duration needed for the TWT indication frame transmitted in the RU when allocating NAV. The resource unit (RU) size and MCS for transmitting the TWT indication frame may be pre-negotiated parameters. The request for allocating additional NAV for the solicited PPDU may be signaled in an add block acknowledgement (ADDBA) exchange or in a procedure used for TID to link mapping.

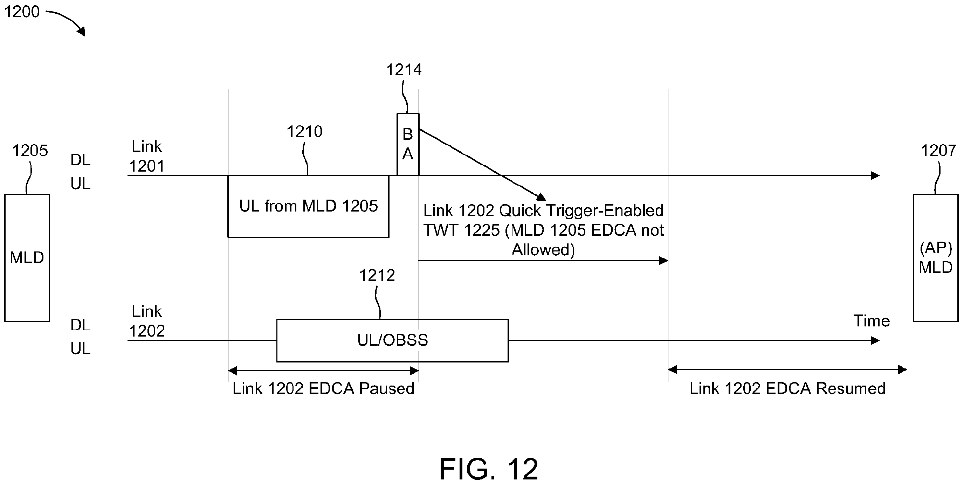

Example procedures may be used for quick-triggered-TWT on a different link. FIG. 12 is a diagram of an example message exchange procedure 1200 between MLD 1205 (e.g., a non-STR STA MLD) and MLD 1207 (e.g., a STR AP MLD) over multi-directional link 1201 and multi-directional link 1202. The message exchange procedure 1200 illustrates an example quick-triggered-TWT 1225 on a different link 1202. During time periods when TIDs of MLD 1205 are used by the MLD 1205 to send UL messages 1210 on link 1201 (which may be acknowledged by AP MLD 1207 sending BAs 1214), AP MLD 1207 may suspend or pause EDCA for TIDy for MLD 1205 on link 1202. During the time periods that MLD 1205 is sending UL messages 1210 on link 1201 using TIDs, other OBSS/UL STAs (not shown) may occupy the medium (channel) on link 1202 by sending UL messages 1212 on link 1202. The PPDU carrying the solicited frame BA 1214 may have a quick-trigger-enabled TWT indication which assigns a TWT 1225 on link 1202. The TWT 1225 on link 1202 may start immediately after the end of the PPDU carrying the indication in BA 1214. Following TWT 1225, AP MLD 1207 may resume EDCA for TIDy for MLD 1205 on link 1202. The link 1201 AP MLD 1207 may assign the duration of the TWT 1224 to be greater or equal to the NAV timer value/remaining PPDU duration observed by the link 1202 AP MLD 1207 at the end of the PPDU carrying the TWT indication (BA 1214). The NAV may be the intra-BSS NAV or basic NAV or the larger of the two if link 2 AP maintains 2 NAV timers. The TWT may be early terminated if the MLD 1205 (e.g., the link 1202 STA of MLD 1205) receives a frame on link 1202 setting the NAV. In examples not explicitly shown, the TWT may be early terminated if the MLD 1205 (e.g., the link 1202 STA of MLD 1205) receives a frame on link 1202 setting the intra-BSS NAV and a frame on link 2 setting the basic NAV. During the TWT 1225, the MLD 1205 (e.g., the link 1202 STA of MLD 1205) may respond to a trigger frame (not shown) if there is no information on basic NAV.

Mechanisms may be used for buffer status indication in ADDBA exchange. With multiple link transmission, a non-STR non-AP MLD may transmit/receive over one link. During that time, the non-STR non-AP MLD may not be able to track the NAV setting over other links, and thus may delay its transmissions over other links. For example, if the transmission/reception over link 1 is time consuming (e.g., involving ADDBA Request/Response exchanges, and/or data and BA exchanges), the transmission over link 2 may be delayed for a long time. If the non-STR non-AP MLD has traffic over link 2 with low latency request, the MLD may have to drop some packets.

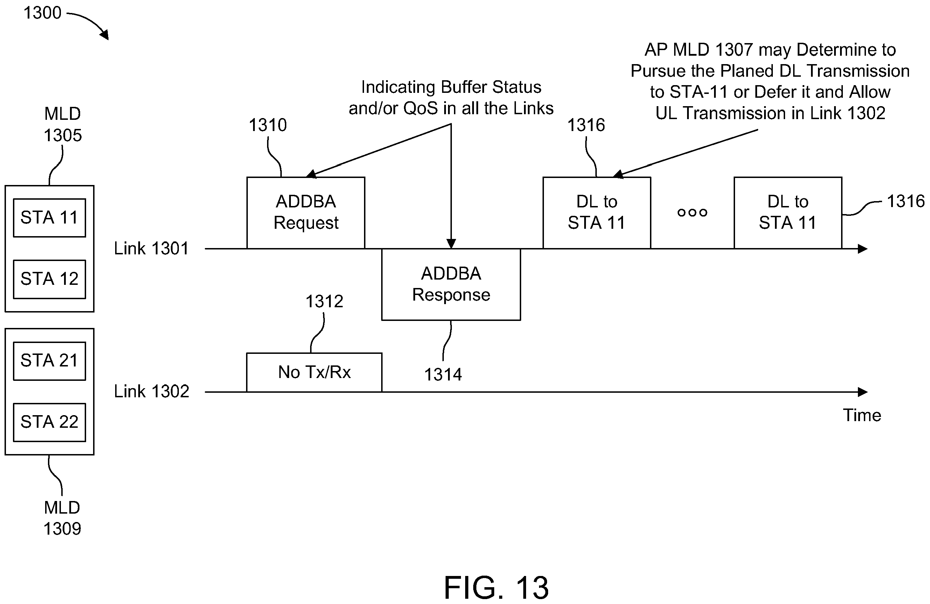

In this case, a procedure may be used to indicate ML traffic status, buffer status, and/or QoS requirements over multiple links in ADDBA Request/Response frame exchanges. FIG. 13 is a diagram of an example message exchange procedure 1300 between MLD 1305 and MLD 1309 (e.g., non-AP MLDs and/or AP MLDs) over multi-directional link 1301, and multi-directional link 1302. For further illustration, the STAs in MLDs 1305 and 1309 are shown (STA11 of MLD 1305 is used for communicating on link 1301, STA12 of MLD 1305 is used for communicating on link 1302, STA21 of MLD 1309 is used for communicating on link 1301, and STA22 of MLD 1309 is used for communicating on link 1302). FIG. 13 illustrates an example procedure 1300 of buffer status indication using add block acknowledgement request 1310/ add block acknowledgement response 1314 (ADDBA Req/Resp) over multiple links 1301, 1302. In this example, MLD 1305 may operate on both links 1301, and 1302 using STA11 and STA12 respectively. MLD 1309 may operate on both link 1301 and 1302 using STA21 and STA22 respectively. STA11 may have traffic to STA21 over link 1301 and to set up a block ACK agreement by using ADDBA request frame 1310 and ADDBA response frame 1314 on link 1301. Meanwhile, STA22 may have traffic buffered on Link 1302 for STA21.

STA11 may be the originator of the BA agreement over link 1301. STA11 may sense the media and acquire a channel over Link 1301. STA11 may transmit an ADDBA request frame 1310 to STA21. In addition to other information (e.g., block ack action field, block ack parameter set field, block ack timeout value field, and/or block ack starting sequence control field) carried in the ADDBA request frame 1301, STA11 may use a field/subfield to indicate that the MLD 1305 may expect ML traffic status, buffer status and/or QoS requirements for one or more or all operation links. In an example, a single bit in the ADDBA request frame 130 may be used to request the status report for all operation links. In another example, the requirement may be per link with link ID carried explicitly. For example, a link bitmap may be used to request buffer status for one or more links. In an example, the requirement may be per TID. For example, a TID bitmap may be used to request buffer status for one or more TIDs. In an example, the requirement may be per access category index (ACI). For example, an ACI bitmap may be used to request buffer status for one or more TIDs.

Once the ADDBA request frame 1310 over link 1301 is received at MLD 1309, STA21 may respond with the ADDBA response frame 1314. In addition to other information (e.g., block ack action field, block ack parameter set field, block ack timeout value field, and/or block ack starting sequence control field) carried in the ADDBA response frame 1314, STA21 may use a field/subfield to indicate traffic status, buffer status, and/or QoS requirements for one or more or all operation links. In an example, a single bit in the ADDBA response frame 1314 may request the status report for all operation links. In an example, the requirement may be per link with link ID carried explicitly. For example, a link bitmap may be used to request buffer status for one or more links. In one method, the requirement may be per TID. For example, a TID bitmap may be used to request buffer status for one or more TIDs. In an example, the requirement may be per access category index (ACI). For example, an ACI bitmap may be used to request buffer status for one or more TIDs. In an example, the ACI bitmap may be indicated in a variant HT control field carried in MAC header. In an example, HE variant HT control field may be reused with some modifications or reinterpretations. A BSR control subfield may be used, and a BSR control subfield may be fully reused. The information carried in a BSR control subfield may be interpreted as per MLD instead off or in addition to per link.

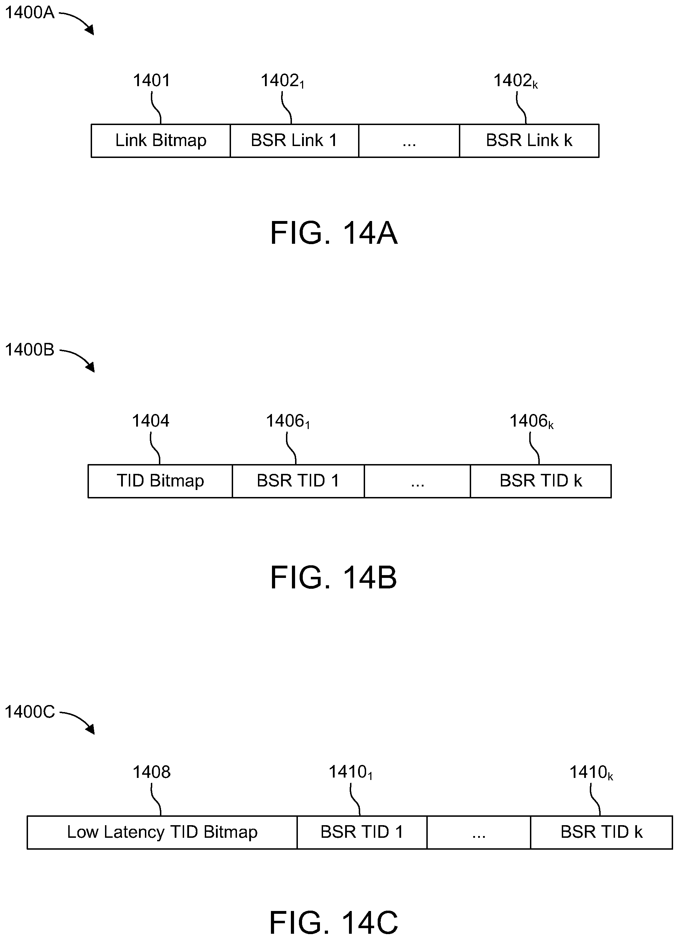

In another example, an EHT variant HT control field may be included in the ADDBA response frame 1314. In this case, both originator and responder STAs (e.g., STA 11 and STA 21) may support the EHT variant HT control field or have capability to support the EHT variant HT control field. An example control field may be defined as a ML BSR or Multi-TID BSR. An example frame format of ML BSR field 1400A is shown in FIG. 14A. ML BSR 1400A may include link bitmap subfield 1401. For example, a '1' in link bitmap field 1401 may indicate the corresponding link may have a BSR report to follow. The size of ML BSR control subfield 1400A may depend on the number of '1's in link bitmap field 1401. For example, if there are K '1's in link bitmap 1401, then there may be K corresponding BSR link subfields 1402₁...1402_{K}. Each BSR link subfield 1402₁...1402_{K} may include information (not explicitly shown) as defined in 802.11ax, such as ACI Bitmap, Delta TID, ACI high, scaling factor, queue size high, and/or queue size all.

An example frame format of a TID BSR field 1400B is shown in FIG. 14B. For example, TID BSR field 1400B may include a TID bitmap subfield 1404. A '1' in TID bitmap field 1404 may indicate the corresponding TID may have BSR report to follow. The size of TID BSR control subfield 1400B may depend on the number of '1's in TID bitmap field 1404. For example, if there are K '1's in TID bitmap field 1404, then there may be K corresponding BSR TID 1406₁...1406_{K} subfields. Each BSR TID subfield 1406₁...1406_{K} may include information (not explicitly shown) such as scaling factor, and/or TID queue size. Scaling factor may indicate the unit in TID queue size. A TID queue size subfield may indicate the buffer size of the TID. In an example, a low latency TID BSR control subfield may be used to indicate low latency TID buffer status. An example low latency TID BSR control subfield 1400C is shown in FIG. 14C. Low latency TID may be predefined/predetermined. Low latency TIDs may be a set of TID with low latency requirement, therefore low latency TIDs may be a subset of all TIDs. If low latency TID BSR control subfield 1400C is used, it may report the buffer status corresponding to TIDs with low latency requirement. The low latency TID BSR subfield 1400C may include a low latency ITD bitmap subfield 1408, and K BSR TID subfields 1410₁...1410_{K}.

With reference to FIG. 13, in an example, some fields of the ADDBA response action frame 1314 may be modified to carry any one or more of the above described information. In an example, a field may be included in the ADDBA response action frame 1314 to carry the above described information. On reception of ADDBA response frame 1314, MLD 1305 may know the buffer status of MLD 1309. MLD 1305 may continue to receive transmissions (e.g., DL transmissions to STA 11 1316) over Link 1301 with negotiated BA agreement if the QoS requirement of buffered traffic may be fulfilled over the other links after the data/BA transmissions on Link 1301.

In an example not shown in FIG. 13, on reception of ADDBA response frame 1315, MLD 1305 may know the buffer status of MLD 1309 and may switch to another link (e.g., link 1302) or activate link 1302 if QoS requirement of buffered traffic may not be fulfilled after the data/BA transmissions on Link 1301, or buffered traffic on Link 1302 may have strict latency/jitter requirement. For example (not explicitly sown in FIG. 13), STA11 may transmit a multi-link request frame to STA21 to indicate the operation on link 1302. If one of the MLDs 1305, 1309 may not have STR capability over multiple links, the ML request frame may be considered as a request to switch operation to Link 1302. If both MLDs 1305, 1309 may have STR capability over multiple links, the ML request frame may be considered as a request to active operation on Link 1302. The ML request frame may indicate the time duration to operate on Link 1302. In the ML request frame, STA11 may hold the BA agreement between STA11 and STA21 on Link 1301. STA11 may indicate a time duration to hold the BA agreement. On reception of the ML request frame, STA21 may transmit a ML response frame to STA11. In the ML response frame, STA21 may confirm the multi-link operation request and switch to Link 1302 right after the ML response frame.

As described in the examples above, ADDBA request/response frame may carry the ML BSR control subfield or TID BSR control subfield or low latency TID BSR control subfield. However, other frames (e.g., frames with MAC header with HT control field) may carry the above-mentioned subfields and may be used to exchange buffer status on other links. Based on the buffer status on other links, the MLD(s) may choose to switch link, activate more links or stay in the current link. BSR subfields as described herein may be solicited or unsolicited. With solicited BSR report, one or more field in ADDBA request frame or other frames to solicit BSR in ADDBA response frame. With unsolicited BSR report, the STA/MLD may add BSR subfields to it MAC header without request.

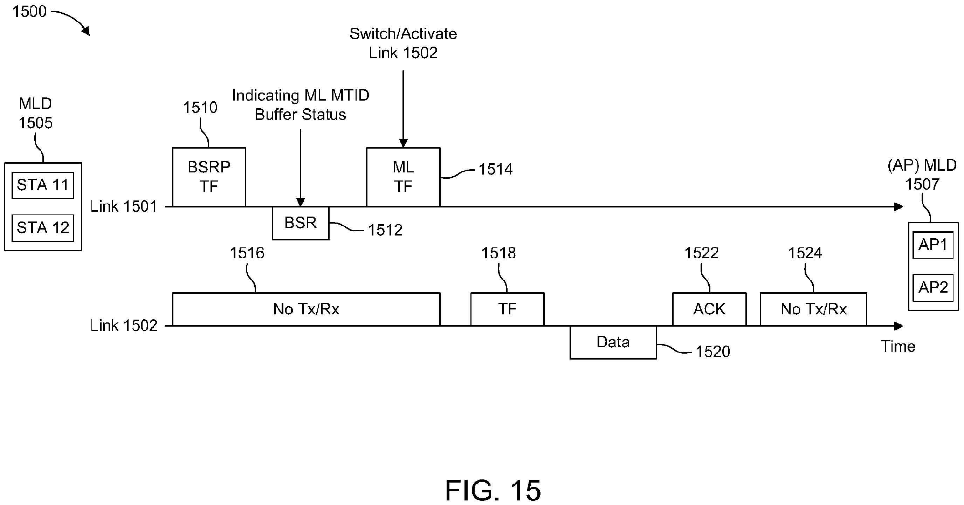

ML Triggers may be used to resolve competition between DL transmission to a non-STR MLD on link A and UL EDCA transmission on link B from the non-STR MLD. An example procedure may quickly enable the transmission on another link. FIG. 15 is a diagram of an example ML trigger procedure 1500 between MLD 1505 (e.g., non-STR STA MLD) and MLD 1507 (e.g., a STR AP MLD) over multi-directional link 1501, and multi-directional link 1502. For further illustration, the STAs in MLD 1505 and APs in AP MLD 1507 are shown (STA11 of MLD 1505 is used for communicating on link 1501, STA12 of MLD 1505 is used for communicating on link 1502, AP11 of AP MLD 1507 is used for communicating on link 1501, AP12 of AP MLD 1507 is used for communicating on link 1502). AP1 may have traffic to send to STA11 over Link 1501 and AP1 may check if STA12 has UL traffic to send to AP2 over Link 1502.

AP1 (of AP MLD 1507) may sense the media and acquire a channel over link 1501. AP1 may transmit a buffer status report poll (BSRP) trigger frame (TF) 1510 to STA11 (of STA MLD 1505). AP1 may indicate in the BSRP TF 1510 that the requested BSR may be on one or more or all links. In an example, the BSRP trigger frame 1510 may include fields from 802.11ax. APs and STAs may exchange capability element to indicate if they support ML and/or ML BSR. For example, if both AP1 and STA11 may have ML capability and support ML BSR, STA11 may send BSR frame 1512 to AP MLD 1507. AP1 may treat the BSR 1512 as MLD level BSR. If AP1 may not have ML capability and/or may not support ML, then STA11 may treat the BSRP TF 1510 as STA level over Link 1501. If AP1 may have ML capability and STA11 may not support ML and/or ML BSR, STA11 may report BSR 1512 as STA level over Link 1501. AP1 may treat the report as STA level over Link 1501.

In an example, a ML BSRP trigger frame 1510 may be defined. In an example (not explicitly shown in FIG. 15), a new trigger type value may be defined to indicate ML BSRP. In one example, a reserved bit in a common info field or user info field may be used to indicate that the BSRP TF 1510 may request report over multiple links. In an example, one of above-mentioned indications may be used to indicate ML BSRP. A trigger dependent common info field and/or trigger dependent user Info field may present to carry more detailed ML information, for example, to indicate on which link/TID the BSRP may trigger. A bitmap of link or TID may be carried in trigger dependent common info or trigger dependent user info field.

In an example, a low latency ML BSRP trigger frame may be defined. One bit/field may be used to indicate the low latency ML BSRP trigger frame. For example, trigger type field or reserved bit may be used. In an example, all low latency TID buffer status reports are requested. In an example, a low latency TID bitmap may be carried to indicate which TIDs buffer status report is requested. The low latency TID bitmap may be carried in a trigger dependent common info field or a trigger dependent user info field.

With reference to FIG. 15, on reception of BSRP trigger frame 1510 from AP1, STA11 may respond with BSR frame 1512 on Link 1501. In an example, BSR frame 1512 may be reinterpreted as a ML BSR depending on the capability of the STA/MLD (e.g., STA11 of MLD 1505). In an example, a modified BSR subfield may be used, as described above. In an example, a queue size subfield carried in QoS control field may be used. The queue size field may be considered as queue size for the MLD 1505. QoS control field may carry queue size for one TID. For example, STA11 may select one TID which may have the most restricted QoS requirement, latency requirement, and/or jitter requirement to report. The TID may be on the same link (e.g., link 1501) or a different link (e.g., link 1502).

With reference to FIG. 15, AP1 may transmit a ML trigger frame (ML TF) 1514. The transmission of MLTF frame 1514 may be SIFS duration after the end of reception of BSR frame 1512, and/or may be in a separate TXOP from BSR 1512. ML TF 1514 may be a new type of trigger frame or a new type of control/management frame or an existing control/management/data frame with some modifications or reinterpretations. The ML TF frame 1514 may trigger the target receiver (e.g., MLD 1505) to activate one or more links on which the receiver may have UL traffic with a certain TID.

In an example, the ML TF frame 1514 may activate one or more links for a certain period of time, which may be indicated in the ML TF frame 1514. Following the period of time, the targeted receiver (e.g., MLD 1505) may switch back to or deactivate the links activated by the ML TF frame 1514. ML TF frame 1514 may indicate the link(s) to be activated. In an example, ML TF 1514 may indicate the TIDs the receiver (e.g., MLD 1505) may transmit. Based on the TID-link mapping, the MLD 1505 may know which links it may activate. In an example, the UL transmission over the newly activated link(s) may be trigger based only. In an example, the UL transmission over the newly activated link(s) may be possible after a predefined/predetermined period or after the MLD 1505 acquires NAV setting on link 1502.

In an example, the ML TF 1514 may activate one or more links without a period limitation, and/or the ML TF 1514 may indicate the link(s) to be activated. In an example, ML TF 1514 may indicate the TIDs the receiver (MLD 1505) may transmit. Based on the TID link mapping, the receiving STA11 may know which links it may activate. In an example, the UL transmission over the newly activated link(s) may be trigger-based only. In an example, the UL transmission over the newly activated link(s) may be possible after a predefined/predetermined period or after the STA12 may acquire NAV setting on link 1502. While STA11 and AP1 exchange frames on Link 1501 (e.g., BSRP TF 1510, BSR frame 1512 and/or ML TF 1514), STA21 may not be able to transmit and receive on Link 1502 because link 1501 and link 1502 are a non-STR link pair for MLD 1505. After AP1 transmits MLTF 1514 on Link 1501, MLD 1505 may know which link it may activate. In the example shown in FIG. 15, MLD 1505 may activate STA12 on Link 1502. AP2 on link 1502 may transmit a TF 1518 to trigger the transmission from STA12. STA12 may then transmit a data (or other type) frame 1520. AP2 may transmit an ACK or BA frame 1522 on link 1502. Depending on the information carried by ML TF 1514, the activation of link 1502 may be for a period of time. In this case, after the period of time that link 1502 is active, MLD 1505 may switch back to the original link (e.g., link 1501) and not transmit (Tx) or receive (Rx) on link 1502 (shown as no Tx/Tx 1524). Similarly, prior to ML TF 1514, MLD 1505 may not transmit or receive on link 1502 (shown as no Tx/Tx 1516).

Another example procedure may use an ML TF to announce an upcoming UL OFDMA based random access (UORA) trigger transmission on another link/TID. In this case, an associated STA or an unassociated STA on link 1 (e.g., the link ML TF is transmitted) may know it may have chance to transmit UL frame soon on Link 2 (e.g., the link UORA trigger is going to transmit). For example, the AP MLD may transmit a ML TF on Link 1 to announce the upcoming transmission of UORA frame on one or more link(s)/TID(s). The ML TF may include, but is not limited to: a link or TID bitmap, where '1' in the bitmap may indicate the link or TID on which the UORA frame may be transmitted; and/or UORA related information field, which may include, for example, an AID12 field to indicate the UORA trigger is for associated STAs or unassociated STAs. In this example, a ML TF may be used to carry information if there will be UORA opportunity in other links. The ML TF may be generalized to carry information if there will be UL transmission opportunity in other links. In an example, other types of control, management and/or data frames may be used to indicate the link or TID bitmap and/or UORA related information. For example, the corresponding information may be carried in control field of a MAC header in a frame.

Procedures for DL/UL solicited frame(s) on link 1 indicating buffer status and/or priority of bufferable units (Bus) on link 2 may be used to resolve competition between DL transmission to a non-STR MLD on link A and UL EDCA transmission on link B from the non-STR MLD. Similar to the examples shown in FIGs. 2, 3 and 4, the buffer status of TID mapped to link 2 may be signaled in the PPDU carrying the solicited frame on link 1. This signaling may allow the link 1 AP or STA of the MLD1 to be less aggressive in the transmission on link 1 and allow more opportunities to receive on link 2. Mechanisms for signaling buffer status may use, for example, an AP PS buffer state subfield in QoS control field, queue size subfield in QoS control field, and/or a BSR in an HE variant of HT control field. The first two mechanisms (i.e., AP PS Buffer State subfield in QoS control field, and Queue Size subfield in QoS control field) may not be allowed on link 1 for QoS frame of TID mapped to link 2. This restriction may be relaxed by a procedure that prohibits non-default TID-to-link mapping for low latency TIDs and multi-link steering and control procedures describe above. The second and third mechanisms (i.e. Queue Size subfield in QoS control field, and BSR in HE variant of HT control field) may not be useful for the situation in FIG. 2 and FIG. 3 because they are not sent in DL direction. In some cases, the solicited control frame may need to be sent in non-HT (duplicate) PPDU, which may disable AMPDU aggregation.

Similar to the examples related to the quick-trigger-enabled TWT described above, a control wrapper frame may be used as a control response frame. The BSR control subfield (part of A-control subfield) or a new control field to report buffer status (e.g., as described above for buffer status indication in ADDBA exchange) may be used to allow an AP/MLD1 to detect UL/DL TIDs mapped to another link. The BSR control subfield or a new control field to report buffer status may further allow buffer status signaling in a DL direction. For example, the buffer status report may implicitly serve as an indication for the receiver to early terminate a TXOP, reduce the aggressiveness of the EDCA, and/or pause the EDCA on link 1 temporarily for a (or predetermined) time duration or until a frame (e.g., a frame carrying the reported TID) is received on link 2 from the sender of the report. The buffer status report may also indicate that a TF is buffered for transmission on link 2.

A control field that may be defined to signal that STAs on link 1 may have to pause EDCA temporarily or use alternative EDCA parameters to perform access on link 1. Examples of alternative EDCA parameters may include, but are not limited to: a longer contention window; a larger interframe space; and/or a different CCA threshold. The control field may further include, but is not limited to include: (partial/broadcast) identities of the third party non-STR STAs; an indication of all (non-STR) STAs on link 1; and indication of all (non-STR) STAs on link 1 whose MLD has TID mapped to link 2; the ID of link 2 for expecting DL/UL transmission; link 2 traffic priority/TID/TSID; the EDCA pause time; and/or an ID of alternative EDCA parameters. Upon receiving this control field/subfield (e.g., in a frame not addressed to AP/non-STR MLD), an AP MLD and/or non-STR MLD may perform reduced/paused EDCA access after the current TXOP, and/or may terminate the current TXOP on link 1. The paused/reduced access on link 1 may be stopped when the AP MLD and/or non-STR MLD receives an DL/UL PPDU on link 2 from the AP MLD and/or non-AP MLD, or based on the end of a duration signaled in the control field.

Similar to the examples related to quick-trigger-enabled TWT described above, a frame may be aggregated with the control response frame in an AMPDU, and/or may be carried in a PPDU format allowing AMPDU aggregation. A frame may include the control field described above, and/or an indication of the buffer status of TID mapped to link 2. The frame may be transmitted in a separate (broadcast) RU in a MU/TB-PPDU with the control response frame. The frame may include the control field described above, and/or an indication of the buffer status of TIDs/TSIDs mapped to link 2. In an example, the frame described above may be a QoS null frame. In this case, QoS null frame of a TID/TSID may be allowed to be transmitted on links that the TID/TSID is not mapped to. Similar to the examples related to the quick-trigger-enabled TWT described above, an indication that there is some (higher priority) traffic buffered on another link may be signaled in a PHY header in the PPDU carrying the control response frame, or in in one or more bits in the scrambler initiation not used by bandwidth (BW) signaling in the PLPC service data unit (PSDU) carrying the control response frame. The mechanisms described above for DL/UL solicited frame(s) on link 1 indicating buffer status and/or priority of BUs on link 2 may also be applied to soliciting a PPDU transmitted by either AP or non-AP STA. In this case, the TXOP responder (e.g., STA/MLD) may perform alternative/reduced/paused EDCA access after the current TXOP. The mechanisms above may also be applied to the solicited PPDU transmitted by a non-AP STA. In this case, the TXOP holder (e.g., AP/MLD) may perform reduced/paused EDCA access after the current TXOP and/or terminate the current TXOP.

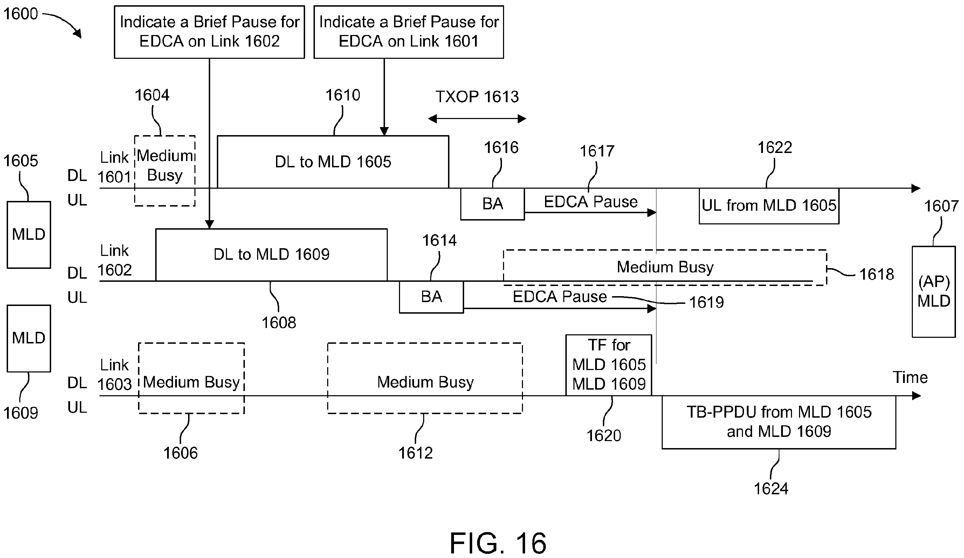

Procedures for an AP indicating an EDCA pause time may be used to resolve competition between DL transmission to a non-STR MLD on link A and UL EDCA transmission on link B from the non-STR MLD. FIG. 16 is a diagram of an example pause time procedure 1600 between MLD 1605 and MLD 1609 (e.g., non-STR STA MLDs) and MLD 1607 (e.g., a STR AP MLD) over multi-directional link 1601, multi-directional link 1602, and multi-directional link 1603. The example pause time procedure 1600 illustrates an example AP MLD 2607 indicating an EDCA pause time as part of DL message transmissions 1610 and 1608, to MLD 1605 and MLD 1609 on links 1601 and 1602 respectively, to allow the transmission of TF 1620 on another link 1603. Outside of medium busy period 1604 on link 1601, MLD 1605 may receive DL message transmissions 1610 from AP MLD 1607, and may send BA 1616. On link 1602, MLD 1609 may receive DL message transmissions 1608 from AP MLD 1607, and may send BA 1614. The AP MLD 1607 may not send the TF 1620 to MLD 1605 and MLD 1609 on link 1603 during medium busy periods 1606 and 1612.

AP MLD 1607 may indicate an EDCA pause time on the current link 1601 to one or more (non-STR) MLDs 1605 receiving on the link 1601 after the current (truncated/early terminated) TXOP 1613. Similarly, AP MLD 1607 may indicate an EDCA pause time on the current link 1602 to one or more (non-STR) MLDs 1609 receiving on the link 1602 after the current (truncated/early terminated) TXOP. This may allow the AP MLD 1607 sufficient time to contend for access on another link 1603 for sending TF 1620 and/or DL data (not explicitly shown). The setting of pause time may be based on the observed NAV/PPDU duration on link 1603, the remaining EDCA counter on link 1603 at the time of transmitting pause time indication on link 1601 and/or 1602, and/or the length of TXOP on other links acquired by the AP MLD 1607. After receiving the DL PPDU 1610 on link 1601, the (non-STR) MLD 1605 receiving on link 1601 may pause it's EDCA counter on link 1601 for the indicated paused duration 1617, or may continue its EDCA counter during the pause time and not performing transmission on link 1601 when counter reaches 0. After the EDCA pause duration1617, MLD 1605 may send UL messages 1622 on link 1601, assuming the medium on link 1601 is available. Similarly, MLD 1609 may not send UL messages on link 1602 until after the EDCA pause duration 1619 and until the medium is no longer busy on link 1602.

The pause indication may be in a broadcast/multicast RU, to be received by intended MLDs 1605 and 1609 for the TF 1620 (or DL data) on link 1603, even though the MLDs 1605 and 1609 are not intended receivers of the PPDU for data reception on link 1601 or 1602. The indications may include a list of IDs associated to the MLDs 1605 and 1609 that are the intended recipients of the TF 1620 (or DL data) to be sent on link 1603. In an example, instead of a pause time, the DL PPDU 1610 and/or 1608 from the AP MLD 1607 on link 1601 and/or 1602, respectively, may indicate an alternative EDCA parameter. The alternative EDCA parameter may provide a better access probability for TF 1620 (or DL data) transmission on link 1603 from AP MLD 1607 to give a high likelihood that TF 1620 (or DL data) transmission on link 1603 happens before the access on link 1601 and/or 1602 from any (non-STR) MLDs 1605 or 1609 who are the potential recipients of the TF 1620 (or DL data). The pause time may also be implemented in the form of MLD specific NAV on link 1601 or 1602. Only MLDs 1605 and 1609 who are the potential recipients of the TF 1620 (or DL data) on link 1603 observes this NAV. As explained above, after the pause duration 1617 (and 1619), the non-STA MLD 1605 (and 1609) may resume its EDCA on link 1601 (and 1602, respectiveIY0. Before the end of pause duration 1617 (and 1619) but after SIFS after PPDU carrying TF1620 (or DL data) on link 1603, the (non-STR) MLD 1605 or 1609 may resume its EDCA on link 1601 or 1602, respectively. Following the transmission of TF 1620, TB-PPDU(s) 1624 may be send on link 1603 from MLD 1605 and/or MLD 1609 to AP MLD 1607 (MLD 1605 and MLD 1609 may be capable of simultaneous transmission on multiple links).

Procedure for conditional TF for another link (e.g., link C) may be used to resolve competition between DL transmission to a non-STR MLD on link A and UL EDCA transmission on link B from the non-STR MLD. For example, an MLD (e.g. AP MLD) may include a conditional TF for another link in a PPDU transmitted by the AP MLD on link A. The conditional TF may have the same format as other TFs except that the allocation is for another link (e.g., link C) and the allocation is conditional on the reception of a preamble on the scheduled link C in an indicated time window. The MLD that is the potential TB-PPDU transmitter on link B may receive the conditional TF on link A. Similar to an EDCA pause indication, the conditional TF may be in a broadcast/multicast RU to be received by intended MLDs for the TF on link B, even though the MLDs are not intended receivers of the PPDU for data reception on link A.

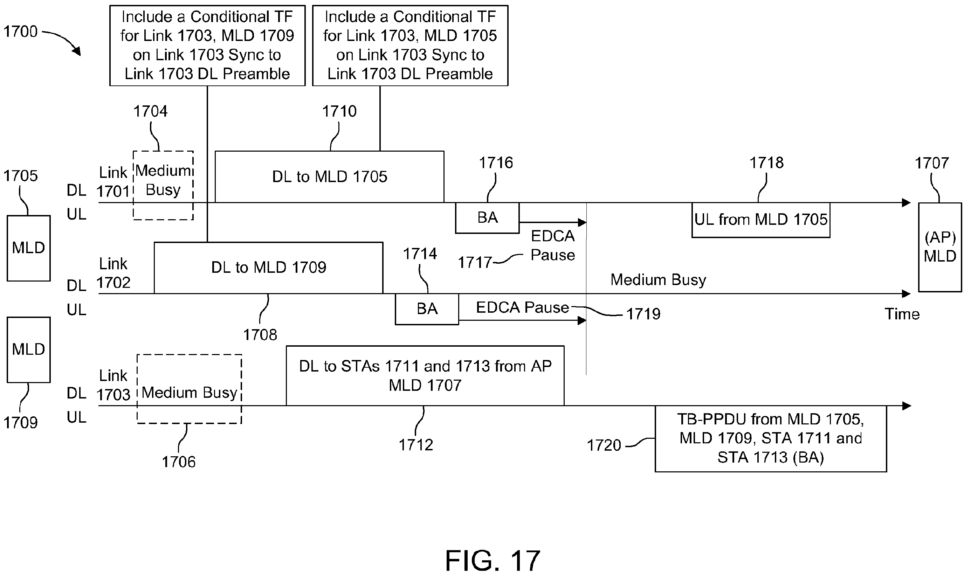

FIG. 17 is a diagram of an example conditional TF procedure 1700 between MLD 1705 and MLD 1709 (e.g., non-STR STA MLDs) and MLD 1707 (e.g., a STR AP MLD) over multi-directional link 1701, multi-directional link 1702, and multi-directional link 1703. Outside of medium busy period 1704 on link 1701, MLD 1705 may receive DL message transmissions 1710 from AP MLD 1707, and may send BA 1716. AP MLD 1707 may not send DL messages to MLDs 1705 and 1709 on link 1703 during medium busy period 1706.

On link 1702, MLD 1709 may receive DL message transmissions 1708 from AP MLD 1707, and may send BA 1714. MLD 1705 and MLD 1709 may receive on links 1701 and 1702, respectively, a conditional TF as part of the DL message transmissions 1710 and 1708. Upon receiving on link 1703 a DL preamble (not shown) from the AP MLD 1707, the MLDs 1705 and1702, based on the preamble to derive the time to perform energy detection (ED) check and the power for the TB-PPDU transmissions 1720 from 1705 and 1709. The conditional TF may indicate the RU allocated on link 1703. In this case, MLDs 1705 and 1709 may refrain from performing UL access after BAs 1716 and 1614 respectively (i.e., EDCA pause time 1717 and EDCA pause time 1719), and may wait for the end of PPDU 1712 on link 1703 to perform the trigger-based (TB) access. After a SIFS duration after the end of the DL PPDU 1712 on link 1703, the EDCA on links 1701 and 17022 may resume and in this example, MLD 1705 may perform concurrent UL transmission 1718 on link 1701 (based on EDCA) and UL TB-PPDU transmission 1720 on link 1703 (based on triggered access).

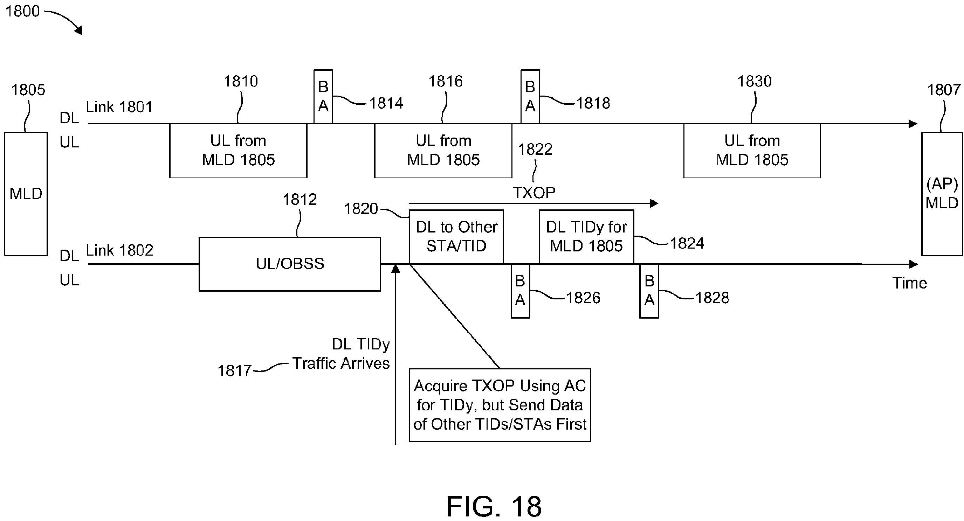

FIG. 18 is a diagram of an example message exchange procedure 1800 between MLD 1805 (e.g., a non-STR STA MLD) and MLD 1807 (e.g., a STR AP MLD) over multi-directional link 1801 and multi-directional link 1802. The message exchange procedure 1800 illustrates an example AP MLD 1807 on link 1802 that obtains TXOP 1822 using TIDy EDCA (when DL TIDy traffic arrives 1817) but sends DL data 1820 to other ACs/STAs/TIDs (not shown) before the MLD 1805 stops UL transmission 1616 on link 1801.

During the time periods that MLD 1805 is sending UL messages 1810 on link 1801 (which may be acknowledged by receiving BA 1814 from AP MLD 1807), other OBSS/UL STAs (not shown) may occupy the medium (channel) on link 1802 by sending UL messages 1812 on link 1802. The AP MLD 1807 on link 1802 may reserve a period of time for transmission (i.e., acquire TXOP 1822) on link 1802 by transmitting or triggering transmission on link 1802 (or both) to other TIDs/STAs (not shown) until (non-STR) MLD 1805 on link 1801 can receive on link 1802. As shown in Figure 18, to avoid the issue described in to FIG. 2, after the arrival of TIDy traffic 1817 for MLD 1805 on link 1802, the AP MLD 1807 may contend for the channel on link 1802 using the AC of TIDy or any other AC to win EDCA access on link 1802 and to occupy the channel on link 1802. Before MLD 1805 finish UL transmission 1816 on link 1801, the AP MLD 1807 may send DL PPDU(s) 1820 to other STAs with lower priority or higher priority ACs than TIDy and/or the AP MLD 1807 may receive from the other STAs ACK/BA(s) 1826). The MPDU(s) in the PPDU(s) 1820 may be fragmented, or the PSDU(s) of the PPDU(s) 1820 may be padded in order to allow the AP MLD 1807 to transmit a subsequent DL PPDU 1824 (with TIDy) to MLD 1805 on link 1802 within the same TXOP 1822 after MLD 1805 stops transmission 1816 on link 1801 (at which point MLD 1805 can start receiving on link 1802, even if MLD 1805 is receiving BA 1818 on link 1801 because MLD 1805 can handle simultaneous reception). AP MLD 1807 may receive BAs 1826 and 1828 from the respective STAs/MLD 1805 in response DL PPDUs 1820 and 1824. Following TXOP 1822 on link 1802, MLD 1805 may resume UL transmission 1830 on link 1801.

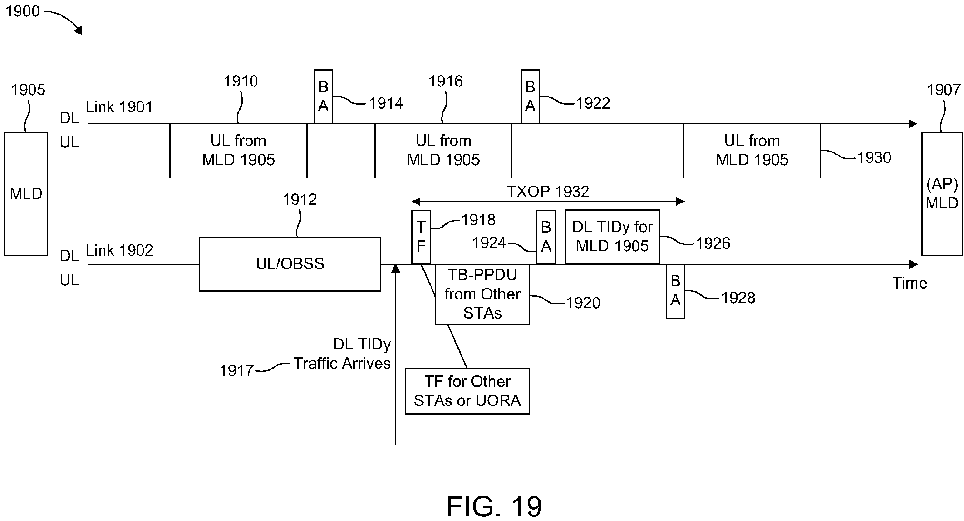

In another example, an AP MLD on link 2 can reserve the channel on link 2 until the (non-STR) MLD on link 1 can receive on link 2 by sending a trigger frame. FIG. 19 is a diagram of an example message exchange procedure 1900 between MLD 1905 (e.g., a non-STR STA MLD) and MLD 1907 (e.g., a STR AP MLD) over multi-directional link 1901 and multi-directional link 1902. The message exchange procedure 1900 illustrates an example AP MLD 1907 on link 1902 that obtains TXOP 1932 by using any AC by sending a TF 1918 to other STAs (not shown) before the MLD 1905 stops transmission of UL data 1916 on link 1901. During the time periods that MLD 1905 is sending UL messages 1910 on link 1901 (which may be acknowledged by receiving BA 1914 AP MLD 1907), other OBSS/UL STAs (not shown) may occupy the medium (channel) on link 1902 by sending UL messages 1912 on link 1902. As illustrated in FIG. 19, after the arrival of TIDy traffic 1917 for MLD 1905 on link 1902, the AP MLD 1807 may reserve the channel on link 1902 using the TF 1918. TF 1918 may be addressed to other STAs (not shown) or triggering UORA transmissions. The AP MLD 1907 on link 1902 may indicate in the TF 1918 an UL duration of TB-PPDU 1920 such that after AP MLD 1907 sends the ACK/BA 1924 to the PPDU 1920 on link 1902, AP MLD 1907 may start DL TIDy transmission 1926 to MLD 1905 on link 1902 (i.e. after UL transmission 1916 by MLD 1905 on link 1901, which may be acknowledged by BA 1922) within the same TXOP 1932. In other words, the end of the transmission of BA 1922 on link 1901 and the end of the transmission of BA 1924 on link 1902 may be synchronized. Following TXOP 1932 on link 1902 (and the DL transmissions of DL PPDU 1926 and BA 1928), MLD 1905 may resume UL transmission 1930 on link 1901. The transmission to MLD 1905 on link 1902 (and similarly to MLD 1805 on link 1802 in FIG. 18) may include frames required for protection (e.g., from the vicinity of MLD 1902 on link 1902) and/or the signaling for MLD 1905 to switch its receiving radio resource to link 1902.

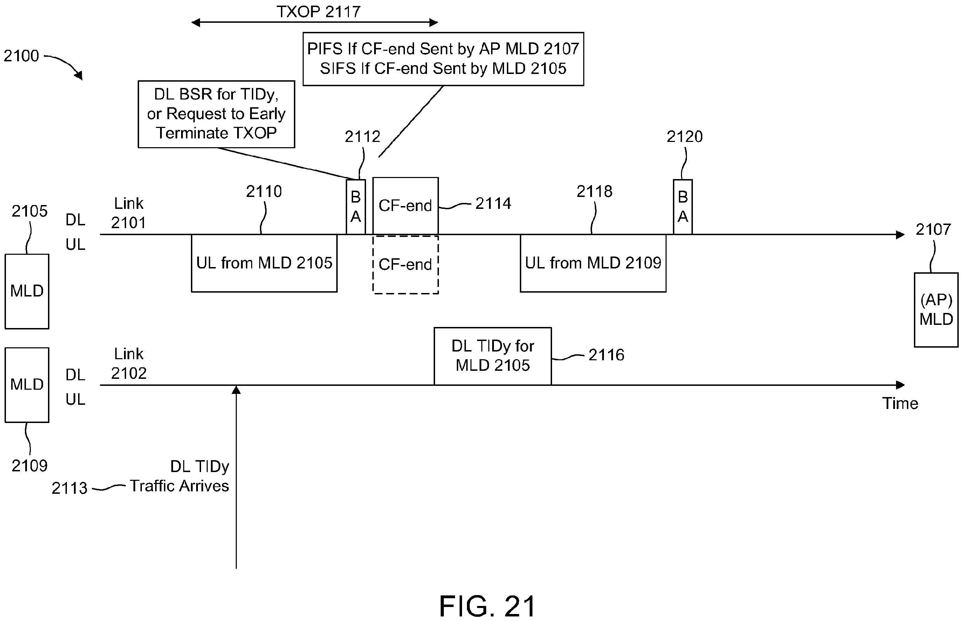

The examples described above may incorporate additional requirements (e.g., see FIG. 21 describe below) to terminate early the STA MLD's TXOP on link 1 (e.g., terminate UL transmission 1916 from MLD 1905 on link 1901 early), so that the STA MLD can receive DL TIDy traffic on link 1902 sooner. The duration of a CF-End frame (i.e., a control frame that terminates a TXOP) transmitted by the STA MLD on link 1 may be counted towards the time after which the AP MLD can start transmission to the STA MLD on link 2. The triggered transmission or DL transmission to other STAs before the transmission to MLD1 on link 2 within the TXOP may not count towards the TXOP limit of the AC acquiring the TXOP (e.g., AC of TIDy). For example, if the TXOP limit for TIDy is 0, the AP may send 1 or more PPDUs in the TXOP before the transmission to MLD1 on link 2 within the TXOP.

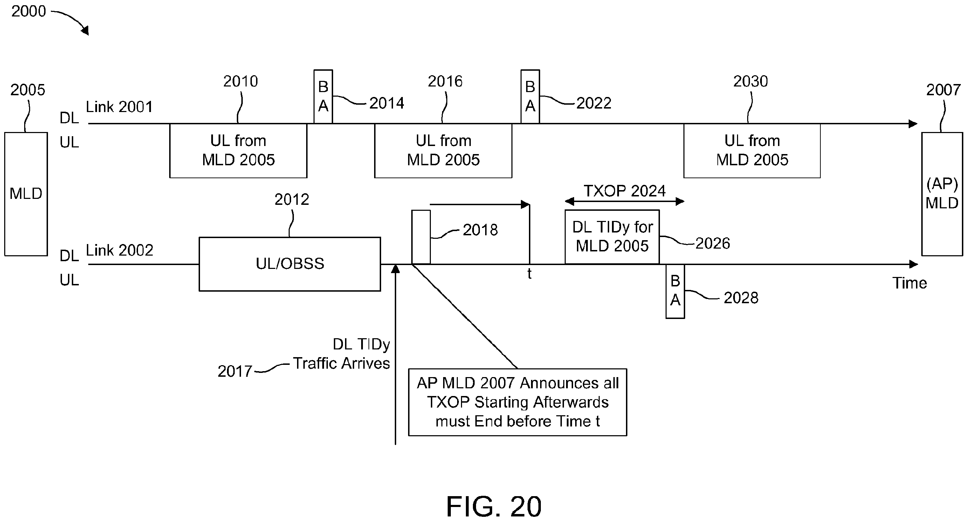

FIG. 20 is a diagram of an example message exchange procedure 2000 between MLD 2005 (e.g., a non-STR STA MLD) and MLD 2007 (e.g., a STR AP MLD) over multi-directional link 2001 and multi-directional link 2002. The message exchange procedure 2000 illustrates an example AP MLD 2007 that uses knowledge of a latest ending time t of future TXOPs. During the time periods that MLD 2005 is sending UL messages 2010 on link 2001 (which may be acknowledged by receiving BA 2014 from AP MLD 2007), other OBSS/UL STAs (not shown) may occupy the medium (channel) on link 2002 by sending UL messages 1812 on link 1802.

After the arrival of TIDy traffic 2017 for MLD 2005 on link 2002, the AP MLD 2007 on link 2002 may send a frame 2018 to indicate a requirement that any TXOP started after the frame 2018 should end before a time t. This requirement may only apply to the intra-BSS STAs (not explicitly shown) on this link 2002, and/or may apply to OBSS STAs (not explicitly shown). The time t may be a time after which the MLD 2005 on link 2001 stops UL transmission 2016 (including a possible CF-end frame), at which point the MLD 2005 can start receiving on link 2002. MLD 2005 may receive BA 2022 acknowledging the UL transmission 2016 on link 2001. Following time t, AP MLD 2007 may transmit DL PPDU 2026 (with TIDy) to MLD 2005 on link 2002, and MLD 2005 may send BA 2028 on link 2002 to acknowledge reception of PPDU 2026. Following TXOP 2024 on link 2002, MLD 2005 may resume UL transmission 2030 on link 2001.

Additional mechanisms, including the imposing requirements, may be used in combination with any of the mechanisms described above to resolve competition between DL transmission to a non-STR MLD on link A and UL EDCA transmission on link B from the non-STR MLD. Operating Mode (OM) control signaling may be performed on a per-link bases and/or per MLD-basis, implicitly and/or explicitly. For example, an OM control transmitted on a link may indicate that UL MU is disabled, UL MU data is disabled, and/or extended range single user (ER SU) is disabled only on that link. In another example, OM control may be applied to a link 2, but transmitted on link 1, and the control may explicitly signal the identity of link 2. The AP MLD may not transmit a quick-triggered-enabled TWT indication, an EDCA pause time indication, and/or control field for BSR (or alternative EDCA parameters) to be applied on a link in the case that the non-AP MLD has signaled that the link is either UL MU disabled or UL MU data disabled. In this case, for a quick-triggered-enabled TWT indication, EDCA pause time indication, and/or control field for BSR (or alternative EDCA parameters) to be applied on link 1 to provide access opportunity on link 2 but without specific identities of MLD/STA (e.g., broadcast), a later transmitted PPDU may include a traffic indication map (TIM) element that informs which STAs on link 1 may apply the TWT indication/EDCA pause time indication/ control field for BSR (or alternative EDCA parameters) on link 1 (e.g., those STAs with TIM bit set to 1). The link 1 STAs of MLDs not indicated in the TIM bitmap (e.g., those with TIM bit set to 0) may perform EDCA access without restrictions (e.g., early exit the quick-trigger-enabled TWT). The later transmitted PPDU may be transmitted on link 2.

FIG. 21 illustrates an example usage of an indication to early terminate TXOP (relative to the original end time of the TXOP). The methods in previous section such as quick-triggered-enabled TWT indication/EDCA pause time/control field for BSR or alternative EDCA parameters can also be used as an indication to early terminate the current TXOP. This may address the issue illustrated in FIG. 3. In this case, the TXOP holder may need to send a CF-End frame on link 1 after the frame carrying the indication. As an alternative for further reducing the delay on link2, the CF-End may be sent by the sender of the indication which early terminates the current TXOP (e.g., by AP on link 1). In this case, the IFS between the frame carrying the indication and the CF-end frame may be a larger value than SIFS, to avoid collision of the CF-End and Data transmission if the frame carrying the indication is lost at/not received by the TXOP holder.

FIG. 21 is a diagram of an example message exchange procedure 2100 between MLD 2105 and MLD 2109 (e.g., non-STR STA MLDs) and MLD 2107 (e.g., a STR AP MLD) over multi-directional link 2101 and multi-directional link 2102. The message exchange procedure 2100 illustrates an example of early termination of a TXOP 2117 on link 2101. In an example, DL TIDy traffic 2113 arrives atAP MLD 2107 for MLD 2105 and may be mapped to link 2102, while MLD 2105 is sending UL traffic 2110 on link 2101. The BA 2112 sent by AP MLD 2107 to MLD 2105 (to acknowledge reception of UL PPDU 2110) may indicate a DL BSR for TIDy and/or a request for the MLD 2105 to terminate early its current TXOP 2117 on link 2101. CF-END message 2114 may be transmitted by AP MLD 2107 (e.g., PIFS duration after BA 2112) or may be sent by MLD 2105 (e.g., ISFS duration after BA 2112), at which point the AP MLD 2007 may transmit a subsequent DL PPDU 2116 (with TIDy) to MLD 2105 on link 2102. UL transmissions 2118 from another MLD 2109 on link 2101 (acknowledged by BA 2120) may overlap in time with the DL PPDU 2116.

Application to early terminate a TXOP may not be limited to a non-STR STA. For example, during the UL TXOP of MLD 1 on link 1, if a DL data of more delay-sensitive TIDz traffic mapped to link 1 arrives at the AP MLD, the procedure can also be used by the AP to early terminate the UL TXOP. The DL transmission to MLD 1/UL transmission from MLD 1 on link 2 in the examples described above may include an indication that it is a last transmission/MPDU; in this case the MLD 1/AP MLD can resume its interrupted transmission on link 1. The indication may be the end of service period (EOSP) field in the QoS control field, or more data field in the frame control field.

Mechanisms for per-sub-channel NAV setting for non-primary channel transmission may be used to address issues related to NAV setting for non-primary channel transmission for multi-directional links. In an 802.11 system, the capabilities of APs and non-AP STAs may be different. For example, an AP may be able to operate on a wideband channel, for example, a channel with 320MHz bandwidth. A non-AP STA may receive or monitor a relatively smaller bandwidth channel than the AP, for example, 20MHz or 80MHz sub-channel(s). The non-AP STA may set NAV based on its received frames on the sub-channel(s) with relatively smaller bandwidth. Traditionally, NAV setting may maintain a prediction of future traffic on the medium based on duration information that it announced in MAC header of some frames. The NAV setting may be available on primary 20MHz sub-channel. In the following examples, a sub-channel may refer to a 20MHz bandwidth channel.

In 802.11be, some information carried in legacy signal (L-SIG) field and/or universal signal (U-SIG) field, which may be modulated and repeated over an (e.g., 20MHz) sub-channel, may be helpful for NAV setting. For example, a TXOP duration field may allow a receiver STA that detects the U-SIG field but not any MAC frame in the PPDU to set NAV based on the TXOP duration. In addition, a puncturing information field may allow a receiver STA to know which sub-channel is punctured and will be punctured in the TXOP. At least based on the above information, an unintended STA, including an OBSS STA, may be able to know which sub-channel may be occupied and how long it may be occupied. Thus, a per-sub-channel-based NAV may be possible or set.

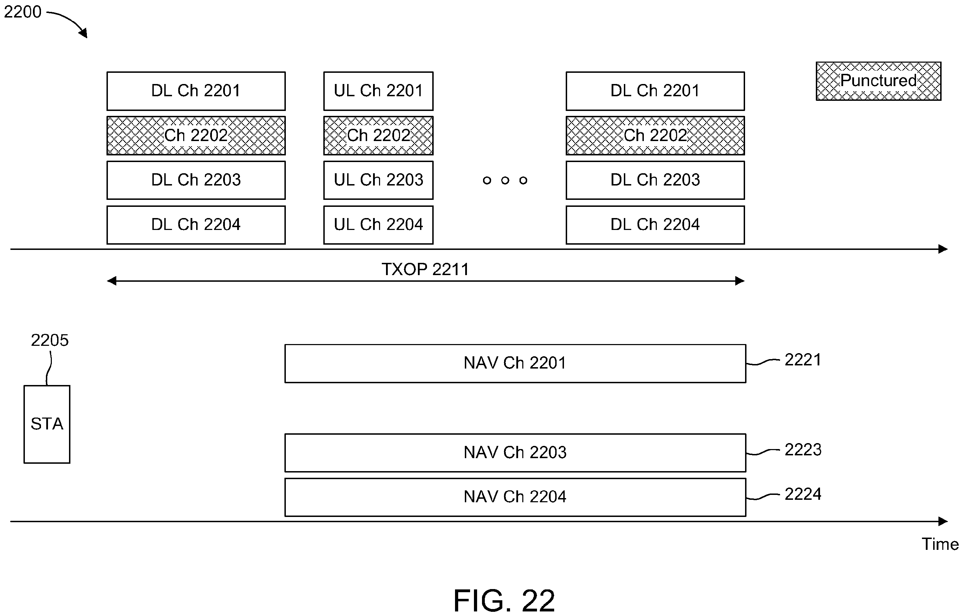

FIG. 22 is a diagram of an example per-sub-channel NAV setting procedure 2200. Th example per-sub-channel NAV setting procedure 2200 may set a per-sub-channel-based NAV setting using a U-SIG field. As illustrated in FIG. 22, a STA 2205 may monitor one or more subchannel, for example, its primary subchannel 2201 (e.g., primary 20MHz subchannel or primary 80MHz subchannel). The STA 2205 may detect a transmission. The STA 2205 may not always be able to detect the data transmission since it may not monitor the entire bandwidth of the transmitted PPDU. However, the STA 2205 may be able to detect one or more signaling fields in a PLCP header which may be transmitted over a sub-channel such as a 20MHz sub-channel. By decoding the signaling fields (e.g., U-SIG field) of the transmitted PPDU, the STA 2205 may determine, for example, a BSS color, a bandwidth, puncturing information, DL/UL information, and/or a duration of the TXOP 2211.

For the BSS color, if the BSS color may not be the STA's 2205 associated BSS color, the STA 2205 may consider the transmission is from an OBSS, otherwise, it may be from its own BSS. The bandwidth field may indicate the bandwidth of the PPDU. 802.11 channelization and signaling over 5GHz and 6GHz may allow a STA 2205 to uniquely know the starting frequency and ending frequency of the channel when it detects a signal on at least one 20MHz sub-channel within the bandwidth. For example, STA 2205 may monitor subchannel 2201 and 2202. STA 2205 may not detect anything on subchannel 2202, however it may detect the transmission on subchannel 2201. It may detect the U-SIG field or other type of PHY SIG field on subchannel 2201. The puncturing information field may indicate which sub-channel(s) is punctured. In an example, the TXOP owner may keep the puncturing information the same over the entire TXOP. In an example, the TXOP owner may allow the TXOP participant to add more puncturing sub-channel during the same TXOP 2211. However, the punctured sub-channel 2202 at the beginning of the TXOP 2211 may be punctured during the entire TXOP 2211. Based on the DL/UL information, the STA 2205 may know the transmission may be from an AP or from a non-AP STA. The TXOP duration field may indicate the duration of the TXOP 2211. Based on the information obtained above, the STA 2205 may set per sub-channel NAV 2221, 2223, and 2224 for subchannels 2201, 2203 and 2204, respectively. The STA 2205 may not have any NAV on subchannel 2202 (or the NAV value for subchannel 2202 is 0) since it is punctured. In an example, the STA 2205 may maintain intra-BSS per sub-channel NAVs 2221, 2223, and 2224, and inter-BSS per sub-channel NAVs 2221_1, 2223_1, and 2224_1. In another example, the STA 2205 may maintain an intra-BSS NAV on the entire bandwidth, and inter-BSS per sub-channel NAVs 2221, 2223, and 2224.

In the example illustrated in FIG. 22, the STA 2205 may observe/detect U-SIG on channel 2201 (Ch 2201). The STA 2205 may determine that: the transmission may be from an OBSS AP (not explicitly shown); the AP may be operating over 80MHz channel; and/or the punctured sub-channel is channel 2202. In this example, the STA 2205 may operate on the same 80MHz channel as the OBSS AP. The STA 2205 may set NAV 2221, 2223, and 2224 for sub-channels 2201, 2203, and 2204 based on the duration of TXOP 2211 (which the STA 2205 may decode). The NAV 2221/2223/2224 may be updated based on the duration field in a MAC header if the STA 2205 decodes a MAC frame carried by the PPDU detected (e.g., any PPDU detected by STA 2205). The use of per-sub-channel NAV 2221/2223/2224 may be similar as NAVs such intra-BSS NAV and inter-BSS NAV. In an example, the inter-BSS NAV and intra-BSS NAV on primary 20MHz sub-channel may be considered and utilized as the traditional inter-BSS NAV and intra-BSS NAV.

With trigger-based transmissions, if CS required subfield in a received trigger frame is set (i.e. carrier sensing is required), inter-BSS NAV on primary 20MHz sub-channel and inter-BSS NAV(s) on the assigned sub-channel(s) may be considered to determine if a STA may respond to the trigger frame. If one or more per-sub-channel NAV counters on the assigned sub-channels may be greater than 0 (i.e. indicating the one or more assigned sub-channels are busy), the STA may not be able to respond the trigger frame. If NAV counters on all of the assigned sub-channels are 0, then the virtual CS may indicate the assigned sub-channels idle. In one example, the STA may be able to respond the trigger frame. In another example, the STA may check the physical CS before responding to the trigger frame. If NAV counters on some assigned sub-channels are 0, but other assigned sub-channels are greater than 0, the STA may respond using one of below mentioned methods. For example, the trigger frame may assign 40MHz RU(s) for the STA for uplink transmission. The per-sub-channel NAVs may indicate that a 20MHz sub-channel may be idle and the other 20MHz sub-channel may be busy.

In an example, the STA may respond the trigger frame over the RU(s) on the available sub-channel. The STA may use RU(s) which may be within the originally assigned RUs. In above mentioned example, the AP may assign a 484 tone RU (corresponding to 40MHz roughly) to the STA in the trigger frame. Due to the per channel NAVs, the STA may be able to respond over the first 20MHz sub-channel. Thus, the STA may use a 242 tone RU to respond. The STA may follow other instructions in trigger frame for the UL transmission. In one embodiment, the STA may not respond to the trigger frame since CS is indicated busy on assigned RUs.

In another example, the AP may have a smaller RU indication in the user info subfield and/or common info subfield of the trigger frame sent to the STA. When the smaller RU indication is set, the STA may be allowed to respond to the trigger frame using the RUs which may belong to the assigned RUs. When the smaller RU indication is not set, the STA may not be allowed to respond to the trigger frame using the RUs which may belong to the assigned RUs. This method may be applied to all or some trigger frame types regardless the use of per-sub-channel NAV. In the examples described above, physical carrier sensing (CS) may be performed before the STA responses to the trigger frame. It is noted that inter-BSS NAV may be referred to as basic NAV.

Example procedures may set MU-EDCA parameter and/or timer for ML. A non-AP MLD may use a single MU-EDCA timer per AC for multiple links. for example, a per MLD MUEDCATimer[AC] variable may be updated with the value described below. The updated MUEDCATimer[AC] may start at the end of the immediate response if the transmitted TB/SU PPDU on any active link includes at least one QoS data frame for that AC that requires immediate acknowledgment. The updated MUEDCATimer[AC] may start at the end of the TB/SU PPDU on any active link if the transmitted TB/SU PPDU does not include any QoS Data frames for that AC that require immediate acknowledgment but includes at least one QoS data frame for that AC.

If per-link advertised MU-EDCA timer values on all active links (e.g., broadcasted using Beacon frame on each link) for an AC are the same, the non-AP MLD may use the common value as the MU-EDCA timer for the AC. If per-link advertised MU-EDCA timer values on all active links for an AC are not the same, the non-AP MLD may use the minimum value as the MU-EDCA timer for the AC. If per link advertised MU-EDCA timer values on all active links for an AC are not the same, the non-AP MLD may use the maximum value as the MU-EDCA timer for the AC. The actives links for an AC may be the set of links to which the TIDs of the AC are mapped. The actives links for an AC may be the set of links which are not in PS mode doze state for the non-AP STA, and to which the TIDs of the AC are mapped. The AP MLD may signal an alternative or additional MU-EDCA Set element or MU-EDCA parameter, which may include an alternative/common MU-EDCA timer in unicast signaling. The MUEDCA timer value in a (re)association response or another unicast DL frame may be different from the MU-EDCA timer signaled in the beacon frame. The AP MLD may signal an alternative or additional set of arbitration interframe spacing number (AIFSN) or contention window (ECW)_min/max values which are common on all active links in the (re)association response or another unicast DL frame. The signaled AIFSN or ECW_min/max values may be different from the AIFSN or ECW_min/max values signaled in the beacon frame.

If UL TIDs of the same AC are mapped to disjoint sets of links (i.e. different TIDs of the same AC do not share any common link), the BSR from the non-AP MLD for the AC may be required to be carried in a QoS control field or in a newly defined field, if BSR carried in HE control information/fields cannot provide explicit identification of the TIDs of the buffered data. The BSR field may explicitly identify the TIDs of the buffered traffic. The BSR field may include a bitmap with each bit corresponding to a TID indicating the presence of buffered traffic of that TID. The BSR field may include a bitmap or identities of the ACs of the buffered traffic, with a following bitmap or identity fields to further identify the TIDs of the identified AC which have buffered traffic.

Per-MLD MU-EDCA timer may be defined per TID instead of per AC. MUEDCATimer[TID] may start at the end of the immediate response if the transmitted TB/SU PPDU on any active link includes at least one QoS Data frame for that TID that requires immediate acknowledgment. The MUEDCATimer[TID] may start at the end of the TB/SU PPDU on any active link if the transmitted TB/SU PPDU does not include any QoS Data frames for that TID that require immediate acknowledgment but includes at least one QoS data frame for that TID. The value of MUEDCATimer[TID] timer may be determined using similar mechanism described above (i.e. based on broadcasted per link parameter, or based on a parameter from a unicast signaling).

An AP MLD and non-AP MLD may be required not to map two different UL TIDs of the same AC to two disjoint sets of links. Upon receiving BSR for a particular AC without knowing the TID of the buffered traffic, the AP may schedule UL access on the links which are in the intersection two sets of links mapped to two TIDs for the same AC. An AP MLD and non-AP MLD may be required to map two different UL TIDs of the same AC to the same set of links. Upon receiving BSR for a particular AC without knowing the TID of the buffered traffic, the AP may schedule UL access on any of the active links in the set. It may be required that if a non-AP MLD signals UL MU (data) disable for a link 1, then for a TID mapped to that link which is also mapped to another link 2 that is not UL MU (data) disabled, the MU-EDCA parameters (for link 1) may be used for EDCA access on the link 1 if (per-MLD) MU-EDCA timer (for that TID or for the AC the TID belongs to) is running. For a pair of N-STR links, if a non-AP MLD signals UL MU (data) disable for one link, the signaling may implicitly indicate to the AP MLD that the other link is also UL MU (data) disabled.

In some examples related to per sub-channel inter/intra BSS NAV, for MU PPDUs, a non-AP STA may monitor at least the primary sub-channel, check NAV in a PHY or MAC header, and/or check puncturing information in a PHY SIG Set NAV for each sub-channel. 80MHz and 160MHz channels may have no overlapping, but 320MHz channels may have overlapping. For 320MHz channels, an indication may be used to indicate the exact 320MHz channel location in U-SIG. Thus, the examples described herein can be applied to inter BSS NAV. In some examples related to MU-EDCA, improved efficiency may be obtained by favoring MU transmissions. For example, an HE non-AP STA may lower EDCA channel access probability, only when they are scheduled by the AP. Both the AP and the STAs may contend to access the channel for the same traffic. This may cause collisions and lower performance.

In some examples related to MU-EDCA in ML, MU-EDCA timer may be used per link and/or per MLD for an AC. As described above, a non-AP STA may lower EDCA access probability when they are scheduled by AP. MU-EDCA timer may be used per link and/or per MLD for an AC. For the per MLD EDCA timer, signaling of the timer value may not be able to reuse the same value(s) in MU-EDCA parameters element because there are N different values for N links reuse the value in MU-EDCA parameters element if the value for N links are the same. For the trigger to start/reset the timer, an ACK of TB-PPDU of any link may be used to restart the timer. In another example, other MU-EDCA parameters (e.g., CW/AIFSN) may be kept per link.

Examples related to TIDs of the same AC mapped to different links are described herein. The link mapping may be defined per TID. BSR in QoS control may be per TID. For example, AC1 may be (TID1, TID2). TID1 is mapped to link1, TID2 is mapped to link 2. UL BSR in QoS control may be reported for TID1. If per-MLD MU-EDCA timer is used, MU-EDCA timer[AC1] may not be applied to link2. Examples for UL MU (data) disable in ML are described herein. Signaling of UL MU (data) may be disabled in ML scenario. The signaling may be per link or N-STR link pair (link1, link2). For example, if link1 signals UL MU (data) disabled, it may implicitly indicate that link 2 UL MU is also disabled. Relationship with per MLD MU-EDCA timer may be described herein. While MU-EDCA timer is running, if link 1 signals UL MU disable, link 1 may use the regular EDCA parameter, while other links uses MU-EDCA parameter for the same AC. A non-AP STA that sends a frame to the AP with an OM Control subfield including a value of 1 in the UL MU Disable subfield or a value of 0 in the UL MU Disable subfield and a value of 1 in the UL MU Data Disable subfield does not participate in UL MU operation. As such it is exempt from updating its EDCA access parameters to the values contained in the MU-EDCA Parameter Set element as defined in this subclause. The link 1 may still use the MU-EDCA parameters since the MLD can still be scheduled on other links which have no co-ex issues.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

### ITEMISED LIST

Item 1. A station (STA) multi-link device (MLD) configured to communicate over a plurality of links, the STA MLD comprising:
   a processor; and
   at least one transceiver, wherein the processor and the at least one transceiver are configured to:
      receive, from an access point (AP) MLD, on a first link of the plurality of links, a first frame comprising a multi-link (ML) element, wherein the ML element includes pausing information indicating a period of time during which the STA MLD will pause transmission and reception on the first link; and
      send, to the AP MLD, on a second link of the plurality of links and during the indicated period of time, uplink (UL) traffic, wherein the first link and the second link are multi-directional links.
Item 2. The STA MLD of item 1 configured as non-simultaneous transmit and receive (non-STR) that is capable of simultaneous transmissions on multiple links and simultaneous reception on multiple links but is not capable of simultaneous transmission and reception on multiple links.
Item 3. The STA MLD of item 1, wherein the AP MLD is capable of simultaneous transmit and receive (STR) on multiple links.
Item 4. The STA MLD of item 1, wherein the UL traffic has an associated low latency requirement.
Item 5. The STA MLD of item 1, wherein the ML element further includes a plurality of link information fields corresponding to the plurality of links.
Item 6. The STA MLD of item 5, wherein each of the plurality of link information fields includes at least one of: a link identifier (ID) subfield, a traffic information subfield, a pausing information subfield, or an allowed transmission time field, wherein the pausing information is included in the pausing information subfield for the corresponding first link.
Item 7. The STA MLD of item 1, wherein the ML further includes at least one of: an element identifier (ID) field, a length field, an element ID extension field, a link steering field, or a number of link fields field.
Item 8. The STA MLD of item 1, wherein the processor and the at least one transceiver are further configured to pause transmission and reception on the first link during the indicated period of time.
Item 9. The STA MLD of item 1, wherein the UL traffic has an associated traffic identification (TID).
Item 10. The STA MLD of item 1, wherein the first frame is one of: a beacon frame, a control frame, a management frame, or a data frame, and wherein the ML element is in a header of the first frame.
Item 11.A method performed by a station (STA) multi-link device (MLD) configured to communicate over a plurality of links, the method comprising:
   receiving, from an access point (AP) MLD, on a first link of the plurality of links, a first frame comprising a multi-link (ML) element, wherein the ML element includes pausing information indicating a period of time during which the STA MLD will pause transmission and reception on the first link; and
   sending, to the AP MLD, on a second link of the plurality of links and during the indicated period of time, uplink (UL) traffic, wherein the first link and the second link are multi-directional links.
Item 12. The method of item 11, wherein the STA MLD is non-simultaneous transmit and receive (non-STR) and is capable of simultaneous transmissions on multiple links and simultaneous reception on multiple links but is not capable of simultaneous transmission and reception on multiple links.
Item 13. The method of item 11, wherein the AP MLD is capable of simultaneous transmit and receive (STR) on multiple links.
Item 14. The method of item 11, wherein the UL traffic has an associated low latency requirement.
Item 15. The method of item 11, wherein the ML element further includes a plurality of link information fields corresponding to the plurality of links.
Item 16. The method of item 15, wherein each of the plurality of link information fields includes at least one of: a link identifier (ID) subfield, a traffic information subfield, a pausing information subfield, or an allowed transmission time field, wherein the pausing information is included in the pausing information subfield for the corresponding first link.
Item 17. The method of item 11, wherein the ML element further includes at least one of: an element identifier (ID) field, a length field, an element ID extension field, a link steering field, or a number of link fields field.
Item 18. The method of item 11, further comprising:
   pausing transmission and reception on the first link during the indicated period of time.
Item 19. The method of item 11, wherein the UL traffic has an associated traffic identification (TID).
Item 20. The method of item 11, wherein the first frame is one of: a beacon frame, a control frame, a management frame, or a data frame, and wherein the ML element is in a header of the first frame.

## Claims

1. A non-access point, AP, multi-link device, MLD, comprising:
a processor configured to generate a frame including a control element that indicates a priority associated with data traffic associated with a link between the non-AP MLD and another MLD, a delay associated with the data traffic associated with the link between the non-AP MLD and the another MLD, and a traffic identifier, TID, associated with the data traffic associated with the link between the non-AP MLD and the another MLD; and
a transmitter configured to transmit the frame including the control element to the another MLD.

2. The non-AP MLD of claim 1, wherein the control element enables the another MLD to satisfy the priority associated with the data traffic associated with a link between the non-AP MLD and the another MLD, and the delay associated with the data traffic associated with the link between the non-AP MLD and the another MLD.

3. The non-AP MLD of claim 1, further comprising:
a receiver configured to receive, from the another MLD, the data traffic associated with the TID.

4. The non-AP MLD of claim 3, wherein the data traffic associated with the TID is received according to the priority associated with the data traffic associated with a link between the non-AP MLD and another MLD, and the delay associated with the data traffic associated with the link between the non-AP MLD and the another MLD.

5. The non-AP MLD of claim 1, wherein the non-AP MLD is configured with multiple links between the non-AP MLD and the another MLD.

6. The non-AP MLD of claim 1, wherein the control element is transmitted in a data frame.

7. The non-AP MLD of claim 1, wherein the control element is transmitted in a medium access control, MAC, header.

8. The non-AP MLD of claim 1, wherein the another MLD is an AP MLD.

9. A method for use in a non-access point, AP, multi-link device, MLD, the method comprising:
generating a frame including a control element that indicates a priority associated with data traffic associated with a link between the non-AP MLD and another MLD, a delay associated with the data traffic associated with the link between the non-AP MLD and the another MLD, and a traffic identifier, TID associated with the data traffic associated with the link between the non-AP MLD and the another MLD; and
transmitting the frame including the control element to the another MLD.

10. The method of claim 9, wherein the control element enables the another MLD to satisfy the priority associated with the data traffic associated with a link between the non-AP MLD and the another MLD, and the delay associated with the data traffic associated with the link between the non-AP MLD and the another MLD.

11. The method of claim 9, further comprising:
receiving, from the another MLD, the data traffic associated with the TID.

12. The method of claim 11, wherein the data traffic associated with the TID is received according to the priority associated with the data traffic associated with a link between the non-AP MLD and another MLD, and the delay associated with the data traffic associated with the link between the non-AP MLD and the another MLD.

13. The method of claim 9, wherein the non-AP MLD is configured with multiple links between the non-AP MLD and the another MLD.

14. The method of claim 9, wherein the control element is transmitted in a data frame.

15. The method of claim 9, wherein the control element is transmitted in a medium access control, MAC, header.
